# EUROPÄISCHE PATENTSCHRIFT

(11) **EP 1 116 128 B1**
(45) Veröffentlichungstag und Bekanntmachung des Hinweises auf die Patenterteilung: **12.06.2002**
(21) Anmeldenummer: 99969514.1
(22) Anmeldetag: 10.09.1999
(51) Int. Cl.: G06F 15/78, G06F 9/318

(54) **VERFAHREN ZUM KONFIGURIEREN EINES KONFIGURIERBAREN HARDWARE-BLOCKS**
METHOD FOR CONFIGURING CONFIGURABLE HARDWARE BLOCKS
PROCEDES POUR CONFIGURER UN BLOC-MATERIEL CONFIGURABLE

(30) Priorität: 23.09.1998 DE 19843640
(43) Veröffentlichungstag der Anmeldung: 18.07.2001
(73) Patentinhaber: Infineon Technologies AG, 81669 München (DE)
(72) Erfinder: ARNOLD, Ralf, D-85586 Poing (DE); KLEVE, Helge, D-85290 Geisenfeld (DE); SIEMERS, Christian, D-31139 Hildesheim (DE)
(74) Vertreter: Jannig, Peter, Dipl.-Ing.
(86) Internationale Anmeldenummer: DE9902878
(87) Internationale Veröffentlichungsnummer: WO0017771

(56) Entgegenhaltungen:
- EP-A- 0 825 540
- WO-A-97/46959
- CONNER D: "RECONFIGURABLE LOGIC" EDN ELECTRICAL DESIGN NEWS,US,CAHNERS PUBLISHING CO. NEWTON, MASSACHUSETTS, Bd. 41, Nr. 7, 28. März 1996 (1996-03-28), Seiten 53-56,58,60,, XP000592126 ISSN: 0012-7515

## Beschreibung

Die vorliegende Erfindung betrifft ein Verfahren gemäß dem Oberbegriff des Patentanspruchs 1, d.h. ein Verfahren zum Konfigurieren eines konfigurierbaren Hardware-Blocks.

Ein derartiges Verfahren wird unter anderem benötigt, um die sogenannte s-unit eines sogenannten >S<puters zu konfigurieren. Ein >S<puter ist eine programmgesteuerte Einheit, die insbesondere durch die Verwendung eines konfigurierbaren Hardware-Blocks in dem die Befehle abarbeitenden Teil in der Lage ist, mehr als einen Befehl pro Prozessortakt auszuführen.

Ein solcher >S<puter ist beispielsweise aus der EP 0 825 540 A1 bekannt.

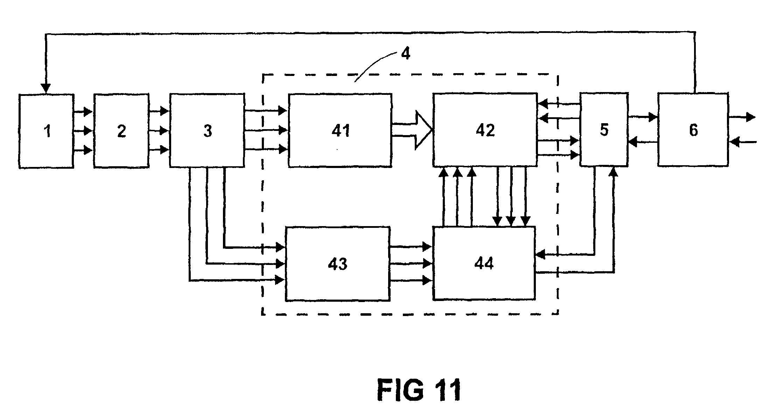

Der grundlegende Aufbau eines >S<puters ist in Figur 11 gezeigt und wird nachfolgend unter Bezugnahme hierauf beschrieben.

Der Vollständigkeit halber sei bereits an dieser Stelle darauf hingewiesen, daß der >S<puter, insbesondere dessen die Befehle abarbeitende Teil nur teilweise (nur so weit es für die vorliegend näher betrachteten konfigurierbaren Hardware-Blöcke und deren Konfigurierung von Bedeutung ist) dargestellt und beschrieben ist.

Der >S<puter gemäß Figur 11 umfaßt eine Vordecodier-Einheit (predecode unit) 1, einen Instruktions-Puffer (instruction buffer) 2, eine Decodier-, Umbenennungs- und Lade-Einheit (decode, rename & load unit) 3, die bereits erwähnte s-Paradigmen-Einheit (s-unit) 4, einen Daten-Cache (data cache) 5, und eine Speicher-Schnittstelle (memory interface) 6, wobei die s-unit 4 aus einem Strukturprogrammier-Puffer (programmable structure buffer) 41, einer Funktionseinheit mit programmierbarer Struktur (functional unit with programmable structure) 42, einem Integer/Adreßinstruktions-Puffer (integer/address instruction buffer) 43 und einem Registerblock (integer register file) 44 besteht.

Die Besonderheit des >S<puters besteht insbesondere in dessen s-unit 4, genauer gesagt in der functional unit 42 derselben. Die functional unit 42 ist eine konfigurierbare Hardware, die basierend auf vom >S<puter auszuführenden Befehlen oder Befehlsfolgen dynamisch so konfigurierbar ist, daß sie die durch die Befehle oder Befehlsfolgen vorgegebenen Aktionen bzw. Operationen ausführen kann.

Vom >S<puter auszuführende Instruktionen (genauer gesagt diese repräsentierende Code-Daten) gelangen aus einem nicht gezeigten Speicher über das memory interface 6 in die predecode unit 1, wo sie vordecodiert werden; dabei können zu den Code-Daten beispielsweise Informationen hinzugefügt werden, die die spätere Decodierung in der decode, rename & load unit 3 erleichtern. Die Code-Daten gelangen dann über den instruction buffer 2 in die decode, rename & load unit 3, wo die Ausführung der durch die Code-Daten repräsentierten Befehle vorbereitet wird. Diese Vorbereitung umfaßt die Decodierung der Code-Daten, die Konfigurierung bzw. Strukturierung der functional unit 42, die Initialisierung bzw. Verwaltung des integer register file 44, und das Starten der wunschgemäß konfigurierten functional unit 42.

Die Strukturierung bzw. Konfigurierung der functional unit 42 erfolgt unter Verwendung von die gewünschte Konfiguration repräsentierenden Konfigurations-Daten, die von der decode, rename & load unit 3 in den programmable structure buffer 41 geschrieben werden. Diese, die gewünschte Konfiguration repräsentierenden Konfigurations-Daten werden in der decode, rename & load unit 3 kreiert; sie können aber auch schon in codierter Form in den Code-Daten enthalten sein.

Die functional unit 42 ist dazu ausgelegt, Daten aus dem register file 44 und/oder dem data cache 5 auszulesen, die ausgelesenen Daten arithmetisch und/oder logisch zu verarbeiten, und das Ergebnis der Verarbeitung repräsentierende Daten in das register file 44 und/oder den data cache 5 einzuschreiben.

Bei geeigneter Initialisierung des register file 44 und bei geeigneter Konfigurierung der functional unit 42 hat der Betrieb der functional unit 42 die Ausführung der Operationen zu Folge, die durch die Ausführung der Befehle, auf der Basis welcher die Initialisierung des register file 44 und die Konfigurierung der functional unit 42 erfolgten, zu bewirken sind.

Die Vornahme der durch die Ausführung von Instruktionen zu bewirkenden Aktionen durch eine entsprechend konfigurierte Hardware (die functional unit 42) ist bekanntlich bedeutend schneller als die Ausführung der Befehle in den "normalen" Arithmetisch/Logischen Einheiten (ALUs) von herkömmlichen programmgesteuerten Einheiten. Dies gilt in besonderem Maße für den Fall, daß die Hardware (die functional unit 42) so konfiguriert ist, daß durch deren Betrieb ein Ergebnis erzielbar ist, das der Ausführung mehrerer aufeinanderfolgender Befehle (eines mehrere Befehle umfassenden Makrobefehls) entspricht.

Bezüglich weiterer Einzelheiten zum Aufbau, der Funktion und der Wirkungsweise von >S<putern und der darin enthaltenen konfigurierbaren Hardware wird auf die vorstehend bereits erwähnte EP 0 825 540 A1 verwiesen.

Der Vollständigkeit halber sei angemerkt, daß nicht alle Aktionen, die durch die vom >S<puter auszuführenden Befehle zu bewirken sind, durch die functional unit 42 ausführbar sind. Befehle wie insbesondere zur Programmablaufsteuerung bzw. Kontrollflußsteuerung dienende Befehle wie beispielsweise Branch-, Jump-, Mo-Operation-, Wait- und Stop-Befehle werden in der Regel auf herkömmliche Art und Weise ausgeführt werden.

Nichtsdestotrotz kann durch die Verwendung konfigurierbarer Hardware-Blöcke wie der functional unit 42 im allgemeinen eine höhere Anzahl von durch auszuführende Befehle zu bewirkenden Aktionen pro Zeiteinheit ausgeführt werden als es mit herkömmlichen programmgesteuerten Einheiten der Fall ist, also mehr als ein Befehl pro Prozessortakt abgearbeitet werden.

Voraussetzung ist natürlich, daß die Hardware-Blöcke schnell konfiguriert und effizient genutzt werden.

Der vorliegenden Erfindung liegt daher die Aufgabe zugrunde, das Verfahren gemäß dem Oberbegriff des Patentanspruchs 1 derart weiterzubilden, daß die Hardware-Blöcke für beliebige Anwendungen schnell und einfach konfigurierbar und effizient nutzbar sind.

Diese Aufgabe wird erfindungsgemäß durch die im Patentanspruch 1 beanspruchten Merkmale gelöst.

Demnach ist vorgesehen, daß die Hardware-Block-Konfigurierung unter Verwendung von Konfigurationsdaten erfolgt, die aus einer Umsetzung von Befehlen oder Befehlsfolgen eines auszuführenden Programmes resultieren, und daß bei der Umsetzung der Befehle oder Befehlsfolgen die Schritte
- Ermittlung der zur Ausführung eines jeweiligen Befehls benötigten Art von Teileinheit des konfigurierbaren Hardware-Blocks,
- Auswahl einer noch nicht anderweitig belegten Teileinheit der zuvor ermittelten Art, und - sofern eine solche Teileinheit gefunden werden konnte -
- Konfigurieren von um die ausgewählte Teileinheit herum vorgesehenen konfigurierbaren Verbindungen
ausgeführt werden.

Durch eine derartige Vorgehensweise lassen sich zu konfigurierende Hardware-Blöcke unter allen Umständen mit minimalem Aufwand wunschgemäß konfigurieren. Die Konfiguration erfolgt dabei sehr schnell und nutzt die Komponenten des Hardware-Blocks optimal aus; so konfigurierte Hardware-Blöcke lassen sich sehr effizient einsetzen.

Vorteilhafte Weiterbildungen der Erfindung sind den Unteransprüchen, der nachfolgenden Beschreibung und den Figuren entnehmbar.

Die Erfindung wird nachfolgend anhand von Ausführungsbeispielen unter Bezugnahme auf die Figuren näher erläutert. Es zeigen
- Figuren 1A bis 1D: ein Beispiel für einheitliche Befehls-Formate, die die umzusetzenden Befehle im betrachteten Beispiel aufweisen sollten oder in die sie vor Beginn der Umsetzung vorzugsweise gebracht werden,
- Figur 2: eine bei der hardwaremäßigen Realisierung der Umsetzung verwendete Look-Up-Table,
- Figuren 3A und 3B: das Format der aus der Look-Up-Table gemäß Figur 2 ausgegebenen Daten,
- Figur 4: das Blockschaltbild einer Schaltung zur Auswahl und Konfigurierung einer zur Ausführung eines Befehls benötigten Teileinheit des Hardware-Blocks,
- Figur 5: das Blockschaltbild einer Schaltung zur Festlegung der Daten- und/oder Signalquellen und der Daten- und/oder Signalziele für die durch die Schaltung gemäß Figur 4 ausgewählte Teileinheit,
- Figur 6: das Blockschaltbild einer Schaltung zur Handhabung von in den umzusetzenden Befehlen enthaltenen Konstanten,
- Figur 7: das Blockschaltbild einer Schaltung zur Durchführung des sogenannten Data Forwarding,
- Figur 8: einen sogenannten Cross-Bar-Switch zum Einschreiben der Konfigurations-Daten in einen temporären Bitstrom,
- Figur 9: eine Anordnung zum Einschleusen des temporären Bitstroms in einen Hauptbitstrom,
- Figur 10: eine komplette Anordnung zum Umsetzen von Befehlen in Konfigurations-Daten zur wunschgemäßen Konfigurierung des Hardware-Blocks,
- Figur 11: den prinzipiellen Aufbau eines >S<puters, und
- Figur 12: den prinzipiellen Aufbau eines Hardware-Blocks der vorliegend näher betrachteten Art.

Zur Erleichterung des Verständnisses wird zunächst der prinzipielle Aufbau eines Hardware-Blocks beschrieben, der durch die danach beschriebene Verfahren konfiguriert werden soll.

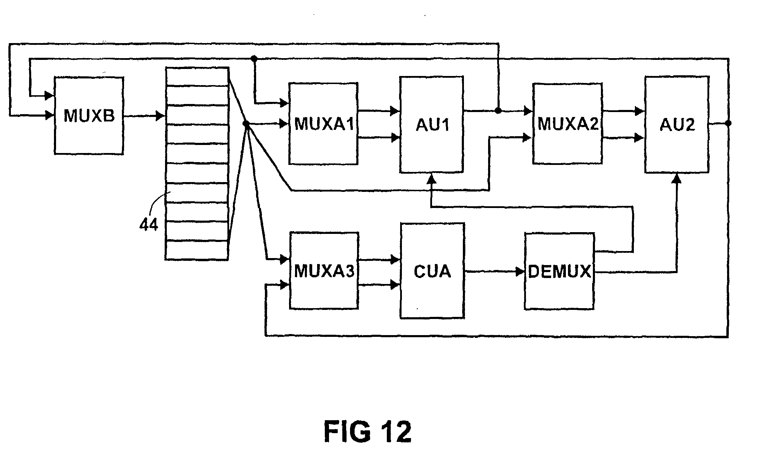

Der prinzipielle Aufbau eines solchen Hardware-Blocks ist in Figur 12 gezeigt. Der gezeigte Hardware-Block ist dazu ausgelegt ist, abhängig von seiner Konfigurierung in einer Speichereinrichtung gespeicherte Daten auszulesen, die ausgelesenen Daten arithmetisch und/oder logisch zu verarbeiten und das Ergebnis der Verarbeitung repräsentierende Daten in die Speichereinrichtung einzuschreiben; er ist beispielsweise als die functional unit 42 des >S<puters gemäß Figur 11 einsetzbar.

Die Speichereinrichtung, aus welcher der konfigurierbare Hardware-Block Daten ausliest und in welche der Hardware-Block Daten einschreibt, kann innerhalb oder außerhalb des Hardware-Blocks vorgesehen sein; im vorliegend betrachteten Beispiel wird die Speichereinrichtung durch das register file 44 des >S<puters gemäß Figur 11 gebildet. Der Hardware-Block ist ein asynchrones Schaltnetz zwischen den Aus- und Eingängen der Speichereinrichtung; die Bestandteile des Hardware-Blocks sind asynchron miteinander gekoppelt.

Die Speichereinrichtung ist vorzugsweise von außerhalb des Hardware-Blocks vor der Inbetriebnahme desselben initialisierbar; denkbar wäre auch, daß der Hardware-Block die Initialisierung der Speichereinrichtung selbst veranlaßt oder durchführt.

Der in der Figur 12 gezeigte Hardware-Block weist eine oder mehrere arithmetische Einheiten AU1, AU2, eine oder mehrere Vergleichs-Einheiten CU, einen oder mehrere Multiplexer eines ersten Typs MUXA1, MUXA2, MUXA3, einen oder mehrere Multiplexer eines zweiten Typs MUXB, und einen oder mehrere Demultiplexer DEMUX auf.

Die arithmetischen Einheiten AU1, AU2 weisen im betrachteten Beispiel zwei Eingangsanschlüsse, einen Ausgangsanschluß und einen Steueranschluß auf. Den arithmetischen Einheiten AU1, AU2 obliegt es, die über deren Eingangsanschlüsse eingegebenen Eingangssignale arithmetisch und/oder logisch zu verarbeiten. Die Operationen, die durch die arithmetischen Einheiten AU1, AU2 ausführbar sind, können fest vorgegeben oder individuell einstellbar (konfigurierbar) sein; sie umfassen insbesondere arithmetische Operationen wie Addition, Subtraktion, Multiplikation, Division etc., logische Verknüpfungen wie UND-Verknüpfungen, ODER-Verknüpfungen, Invertierung, Komplementbildung etc., arithmetische und logische Shift-Operationen, und Datentransfers (Durchschaltung eines der eingegebenen Signale zum Ausgangsanschluß). Die arithmetischen Einheiten AU1, AU2 sind nicht mit den Arithmetisch/-Logischen Einheiten (ALUs) herkömmlicher programmgesteuerter Einheiten wie Mikroprozessoren, Mikrocontrollern etc. gleichzusetzen; die von ihnen ausführbaren Operationen sind begrenzt, so daß der Aufbau der arithmetischen Einheiten AU1, AU2 vergleichsweise einfach bleiben kann. Über die Steueranschlüsse der arithmetischen Einheiten AU1, AU2 ist festlegbar, ob die betreffende arithmetische Einheit die Operation, zu deren Ausführung sie vorgesehen ist, ausführt oder nicht. Dies ermöglicht die praktische Umsetzung von Befehlen, deren Ausführung vom Vorliegen einer bestimmten Bedingung abhängt. Die Bedingung kann beispielsweise der Zustand eines bestimmten Flags sein: ist das Flag gesetzt, wird die der betreffenden arithmetischen Einheit obliegende Aufgabe (beispielsweise eine Addition) ausgeführt, andernfalls nicht (oder umgekehrt). Derartige, nachfolgend als "konditionierte Befehle" bezeichnete Befehle ermöglichen es, die schwer handhabbaren bedingten Sprungbefehle zu eliminieren; sie werden später noch genauer beschrieben.

Die Vergleichs-Einheit CU weist im betrachteten Beispiel zwei Eingangsanschlüsse und einen Ausgangsanschluß auf. Der Vergleichs-Einheit CU obliegt es, die an deren Eingangsanschlüssen anliegenden Signale oder Daten Vergleichsoperationen zu unterziehen. Die Operationen, die durch die Vergleichs-Einheit CU ausführbar sind, können fest vorgegeben oder individuell einstellbar (konfigurierbar) sein; sie umfassen beispielsweise Größer-, Größer/Gleich-, Kleiner-, Kleiner/-Gleich-, Gleich-, und Ungleich-Vergleiche und Überprüfungen auf wahr (TRUE) und unwahr (FALSE). Der Ausgangsanschluß der Vergleichs-Einheit CU ist über den nachfolgend noch genauer beschriebenen Demultiplexer DEMUX mit den Steueranschlüssen der arithmetischen Einheiten AU1, AU2 verbunden. Vom Ergebnis der in der Vergleichs-Einheit CU ausgeführten Operation hängt es also ab, ob die arithmetischen Einheiten AU1, AU2 die Operation, zu deren Ausführung sie vorgesehen sind, ausführen oder nicht.

Die Multiplexer des ersten Typs MUXA1, MUXA2, MUXA3, der Multiplexer des zweiten Typs MUXB, und der Demultiplexer DEMUX dienen zur Auswahl der Daten- und/oder Signalquellen und der Daten- und/oder Signalziele. Genauer gesagt dienen
- der Multiplexer MUXA1 zur Auswahl der Quellen der den Eingangsanschlüssen der arithmetischen Einheit AU1 zugeführten Daten und/oder Signale (mögliche Daten- und/oder Signalquellen sind im betrachteten Beispiel das register file 44 und andere arithmetische Einheiten),
- der Multiplexer MUXA2 zur Auswahl der Quellen der den Eingangsanschlüssen der arithmetischen Einheit AU2 zugeführten Daten und/oder Signale (mögliche Daten- und/oder Signalquellen sind im betrachteten Beispiel das register file 44 und andere arithmetische Einheiten),
- der Multiplexer MUXA3 zur Auswahl der Quellen der den Eingangsanschlüssen der Vergleichs-Einheit CU zugeführten Daten und/oder Signale (mögliche Daten- und/oder Signalquellen sind im betrachteten Beispiel das register file 44 und die arithmetischen Einheiten),
- der Multiplexer MUXB zur Auswahl der Quellen der dem register file zugeführten Daten und/oder Signale (mögliche Daten- und/oder Signalquellen sind im betrachteten Beispiel die arithmetischen Einheiten und/oder das register file selbst),
- der Demultiplexer DEMUX zur Auswahl des oder der Ziele für die von der Vergleichs-Einheit CU ausgegebenen Daten und/oder Signale (mögliche Daten- und/oder Signalziele sind im betrachteten Beispiel die arithmetischen Einheiten).

Die Multiplexer des ersten Typs weisen mehrere Eingangsanschlüsse und zwei Ausgangsanschlüsse auf, die Multiplexer des zweiten Typs mehrere Eingangsanschlüsse und einen Ausgangsanschluß, und der Demultiplexer einen Eingangsanschluß und mehrere Ausgangsanschlüsse.

Die Multiplexer und der Demultiplexer weisen in der Figur 12 nicht gezeigte Steueranschlüsse auf, über welche einstellbar ist, welche Eingangsdaten und/oder -signale auf welche Ausgangsanschlüsse durchgeschaltet werden. Die Anzahl der Steueranschlüsse hängt von der erforderlichen Anzahl der verschiedenen Zuordnungs-Kombinationen ab; bei 32 Eingangsanschlüssen und zwei Ausgangsanschlüssen sind beispielsweise 10 Steueranschlüsse erforderlich, um an beliebigen Eingangsanschlüssen anliegende Signale und/oder Daten auf beliebige Ausgangsanschlüsse durchschalten zu können. Im Fall des Einsatzes des Hardware-Blocks als functional unit 42 im >S<puter gemäß Figur 11 sind die Steuersignalanschlüsse vorzugsweise mit dem programmable structure buffer 41 verbunden, so daß die in diesen eingeschriebenen Konfigurations-Daten im wesentlichen unmittelbar zur Multiplexer-Ansteuerung verwendbar sind. Die im programmable structure buffer 41 gespeicherten Konfigurations-Daten umfassen vorzugsweise auch die Konfigurations-Daten zur Festlegung der jeweiligen Funktion der arithmetischen Einheiten AU1, AU2 und der Vergleichs-Einheit CU.

Durch die arithmetischen Einheiten AU1, AU2, die Vergleichs-Einheit CU, die Multiplexer des ersten Typs MUXA1, MUXA2, MUXA3, den Multiplexer des zweiten Typs MUXB, und den Demultiplexer DEMUX wird der Hardware-Block in die Lage versetzt, in einer Speichereinrichtung (im register file 44) gespeicherte Daten auszulesen, die ausgelesenen Daten arithmetisch und/oder logisch zu verarbeiten und das Ergebnis der Verarbeitung repräsentierende Daten in die Speichereinrichtung (das register file 44) einzuschreiben.

Der in Figur 12 gezeigte und unter Bezugnahme darauf beschriebene Hardware-Block ist nur zur Erläuterung des grundlegenden Aufbaus gedacht. In der Praxis werden die arithmetische Einheiten, die Vergleichs-Einheiten, die Multiplexer, und die Demultiplexer in einer deutlich größeren Anzahl vorgesehen werden als es beim Beispiel gemäß Figur 12 der Fall ist. Der Hardware-Block ist vorzugsweise so dimensioniert, daß normalerweise sämtliche Operationen, die von einem später noch näher beschriebenen, sogenannten Hyperblock zu bewirken sind, auf ein Mal in ihn einprogrammierbar sind.

Die im Hardware-Block vorgesehenen Daten- und/oder Signalpfade können durch einzelne Leitungen oder durch Busse gebildet werden, wobei es sich als vorteilhaft erweisen kann, wenn in den einzelnen Teileinheiten des Hardware-Blocks oder im Bus-System konfigurierbar ist, wie viele und/oder welche Busleitungen zu berücksichtigen sind.

Die Konfigurierung eines Hardware-Blocks nach Art der Figur 12 kann basierend auf Befehlen oder Befehlsfolgen erfolgen. Setzt man Befehle oder Befehlsfolgen in entsprechende Hardware-Block-Strukturen um, so ist der so konfigurierte Hardware-Block als Ablaufeinheit für sequentielle Befehlsfolgen nutzbar. Diese Form der Hardware-Block-Konfigurierung wird nachfolgend auch als struktur-prozedurale Programmierung bezeichnet.

Ausgangspunkt für die struktur-prozedurale Programmierung kann ein in einer Hochsprache wie beispielsweise C, C++ etc. geschriebenes Programm sein. Dieses Programm wird durch einen Compiler übersetzt, und der dabei erhaltene Code wird (vorzugsweise hyperblock-weise) in Strukturinformationen umgesetzt, basierend auf welcher der zu konfigurierende Hardware-Block konfigurierbar ist. Was unter einem Hyperblock zu verstehen ist, wird später noch genauer beschrieben werden.

Ausgangspunkt für die struktur-prozedurale Programmierung kann selbstverständlich auch ein in Assembler geschriebenes oder sonstiges Programm sein. Die Art und Weise der Programmierung (funktional, imperativ, objekt-orientiert, ...) ist ebenfalls keinen Einschränkungen unterworfen.

Es erweist sich als vorteilhaft wenn der in die Strukturinformation umzusetzende Code, also die durch den Compiler oder auf andere Art und Weise erzeugten Maschinenbefehle nur bestimmte Maschinenbefehl-Typen, nämlich unkonditionierte Befehle, konditionierte Befehle, Predicate-Befehle, und Loop-Befehle umfassen. Dann lassen sich in der Regel besonders lange (besonders viele Befehle enthaltende) Befehls-Blöcke mit nur einem Eintrittspunkt und nur einem Austrittspunkt bilden. Die Generierbarkeit von möglichst langen Befehls-Blöcken mit nur einem Eintrittspunkt und nur einem Austrittspunkt ist sehr bedeutsam, weil sich Befehle, die ein- und dem selben Befehls-Block angehören, und zwar nur solche Befehle, als eine Einheit (als eine sich aus mehreren Befehlen zusammensetzende Makroinstruktion) behandeln lassen, die in eine gemeinsame Hardware-Block-Struktur umgesetzt und auf ein Mal ausgeführt werden kann. Legt man der Konfigurierung eines Hardware-Blocks jeweils genau eine solche Einheit zugrunde (und ist der Hardware-Block groß genug, um so konfiguriert werden zu können), so läßt sich die Anzahl der zur Abarbeitung eines Programms erforderlichen Umstrukturierungen bzw. Umkonfigurierungen des Hardware-Blocks auf ein Minimum reduzieren. Die Befehls-Blöcke, deren Generierung derzeit favorisiert wird, und deren Bildung durch die vorstehend genannten Befehlsgruppen auch möglich ist, sind die vorstehend bereits erwähnten Hyperblöcke.

Hyperblöcke zeichnen sich insbesondere dadurch aus, daß bedingte Sprungbefehle unter Anwendung der nachfolgend noch näher beschriebenen sogenannten if-Konversion eliminiert werden.

Bezüglich weiterer Einzelheiten zu den Hyperblöcken, anderen Befehls-Blöcken und damit in Zusammenhang stehenden Themen wird auf
- Wen-Mei W. Hwu et al.: "Compiler Technology for Future Microprocessors", Invited Paper in Proceedings of the IEEE, Vol. 83 (12), Dezember 1995, Special Issue on Microprocessors, Seiten 1625 bis 1640,
- Henk Neefs, Jan van Campenhout: "A Microarchitecture for a Fixed Length Block Structured Instruction Set Architecture", Proceedings of the Eighth IASTED International Conference on Parallel and Distributed Computing and Systems, Seiten 38 bis 42, IASTED/ACTA Press, 1996, und
- Richard H. Littin, J.A. David McWha, Murray W. Pearson, John G. Cleary: "Block Based Execution and Task Level Parallelism", in: John Morris (Ed.), "Computer Architecture 98", Proceedings of the 3^{rd} Australasian Computer Architecture Conference, ACAC'98, Perth, 2-3 February 1998, Australian Computer Science Communications, Vol. 20, No. 4, Seiten 57 bis 66, Springer, Singapore,
verwiesen.

Die vorstehend erwähnten unkonditionierten Befehle sind Befehle zur bedingungslosen Bearbeitung von Daten einschließlich der Kopie von Daten von einem Speicherbereich in einen anderen (von einem Register in ein anderes). Diese Befehle werden im folgenden als normale Befehle bezeichnet. Sie umfassen arithmetische und logische Verknüpfungen zwischen Daten zu neuen Werten und die sogenannten Move-Befehle zur Kopie von Registerinhalten. Das allgemeine Format dieser Befehle lautet: <Mnemonic> <Ziel-Register>, <Quellen-Register 1>, <Quellen-Register 2>. Zur Durchführung der durch einen solchen Befehl spezifizierten Operation wird normalerweise eine arithmetische Einheit des Hardware-Blocks benötigt.

Die konditionierten Befehle sind Befehle zur Bearbeitung von Daten bei Vorliegen einer bestimmten Bedingung (Kondition). Die durch diese Befehle auszuführenden Aktionen entsprechen den durch die normalen Befehle ausführbaren Aktionen, wobei die Ausführung der betreffenden Aktionen jedoch von einer vorbestimmten Bedingung abhängt. Ist die Bedingung erfüllt, wird die durch den Befehl spezifizierte Aktion ausgeführt, anderenfalls wird nichts ausgeführt (der betreffende Befehl wirkt dann wie ein NOP-Befehl). Diese Befehle werden im folgenden als bedingte Befehle bezeichnet. Das allgemeine Format dieser Befehle lautet: <Mnemonic>p <Ziel-Register>, <Quellen-Register 1>, <Quellen-Register 2> <p-Flag>, wobei durch das "p" am Ende des Mnemonic die Abhängigkeit der Befehlsausführung von einer Bedingung signalisiert wird, und wobei die Bedingung durch einen bestimmten Zustand eines bestimmten Flags (des "p-Flag") definiert wird. Zur Durchführung der durch einen solchen Befehl spezifizierten Operation wird normalerweise eine arithmetische Einheit des Hardware-Blocks benötigt; zur Überprüfung der Bedingung wird eine Vergleichs-Einheit benötigt, deren Ausgang mit dem Steuereingang der arithmetischen Einheit verbindbar ist.

Die Predicate-Befehle sind Befehle zur Festlegung des Zustandes des in den bedingten Befehlen verwendeten Bedingungs-Flags (des p-Flags). Die Festlegung erfolgt dabei während des Programmablaufs basierend auf einem Vergleich von zwei Daten. Diese Befehle werden im folgenden als pxx-Befehle bezeichnet. Das allgemeine Format dieser Befehle lautet: pxx <Quellen-Register 1>, <Quellen-Register 2>, <p-Flag>, wobei xx die durchzuführende Vergleichsoperation spezifiziert und durch gt (größer als), ge (größer oder gleich), eq (gleich), ne (ungleich), le (kleiner oder gleich) oder lt (kleiner als) zu ersetzen ist. Die pxx-Befehle sind mit den üblichen Branch-Befehlen vergleichbar und dienen zum Ersatz derselben durch die Anwendung der sogenannten if-Konversion (siehe hierzu den vorstehend bereits erwähnten Aufsatz von Wen-Mei W. Hwu et al.).

Die Loop-Befehle sind zur Schleifenwiederholung dienende Befehle am Ende eines Hyperblocks. Sie veranlassen einen Rücksprung an den Anfang des betreffenden Hyperblocks, falls eine im Befehl spezifizierte Bedingung erfüllt ist; sie können die Generierung eines READY-Signals veranlassen, wenn die Bedingung nicht mehr erfüllt ist. Die Bedingung ist durch ein bestimmtes Ergebnis einer Vergleichsoperation definiert. Das allgemeine Format dieser Befehle lautet: loopxx <Quellen-Register 1>, <Quellen-Register 2>, wobei xx die durchzuführende Vergleichsoperation spezifiziert.

Wie aus den Formaten der genannten Befehlstypen ersichtlich ist, werden als Daten- und/oder Signalquellen und Datenund/oder Signalziele jeweils Register verwendet. Dies erweist sich bei Verwendung von Hardware-Blöcken nach Art der Figur 12 als besonders vorteilhaft, weil auf die Register (das register file 44) besonders effizient zugegriffen werden kann. Prinzipiell könnten aber auch Befehle zugelassen werden, deren Daten- und/oder Signalquellen und Daten- und/oder Signalziele keine Register sind.

Viele Programme oder wenigstens große Teile von diesen können unter ausschließlicher Verwendung der vorstehend erläuterten Befehls-Typen geschrieben oder in solche Programme übersetzt werden und mithin vollständig in einen Hardware-Block der in der Figur 12 gezeigten Art zur Ausführung gebracht werden. Die Verwendung derartiger Hardware-Blöcke in programmgesteuerten Einheiten kann deren Leistungsfähigkeit daher erheblich steigern. Hardware-Blöcke der in der Figur 12 gezeigten Art können jedoch auch außerhalb programmgesteuerter Einheiten als eigenständige Einrichtungen zum Einsatz kommen und dann ebenfalls basierend auf Befehlen oder Befehlsströmen konfiguriert werden.

Im folgenden wird nunmehr die Konfigurierung eines Hardware-Blocks beschrieben, durch welche dieser durch Befehle oder Befehlsfolgen vorgegebene arithmetische und/oder logische Operationen oder Operationsfolgen ausführen kann.

Der Hardware-Block, genauer gesagt dessen Teileinheiten (arithmetische Einheiten, Vergleichs-Einheiten, Multiplexer, Demultiplexer ...) und die Verbindungen zwischen den Teileinheiten werden im betrachteten Beispiel durch die gewünschte Konfiguration repräsentierenden Konfigurations-Daten (Konfigurations-Bits) konfiguriert. Dementsprechend ist es die Aufgabe des nachfolgend beschriebenen Konfigurations-Verfahrens, die Konfigurations-Daten bzw. einen diese enthaltenden Bitstrom basierend auf den der Hardware-Block-Konfiguration zugrundezulegenden Befehlen oder Befehlsfolgen zu generieren oder zu variieren.

Im betrachteten Beispiel wird davon ausgegangen, daß ausschließlich die vorstehend genannten Typen von Befehlen, d.h. normale Befehle, bedingte Befehle, pxx-Befehle und loopxx-Befehle umgesetzt werden; andere Befehle müssen anderweitig ausgeführt werden, beispielsweise durch die Ausführungseinheit einer herkömmlichen programmgesteuerten Einheit.

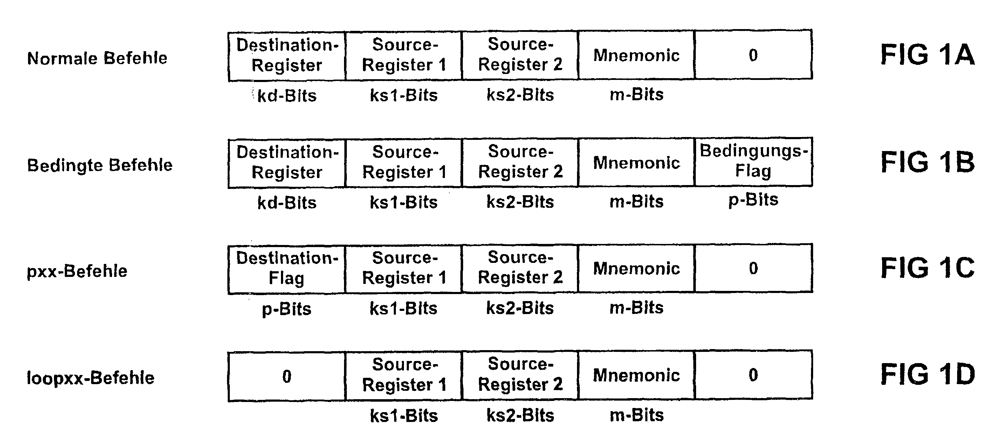

Für die Umsetzung der umsetzbaren Befehle in entsprechende Hardware-Block-Strukturen kann es sich als vorteilhaft erweisen, wenn die Befehle von Haus aus ein in den Figuren 1A (normale Befehle), 1B (bedingte Befehle), 1C (pxx-Befehle), und 1D (loopxx-Befehle) beispielhaft veranschaulichtes einheitliches Format aufweisen oder durch einen Decodierer in ein solches Format gebracht werden.

Insbesondere wenn die Teileinheiten des Hardware-Blocks konfigurierbar sind, werden diesen (physikalischen) Teileinheiten logische bzw. virtuelle Einheiten zugeordnet, wobei die virtuellen Einheiten die verschiedenen Funktionen der physikalischen Teileinheiten angeben. Der physikalischen Teileinheit "erste arithmetische Einheit AU1" können - sofern diese konfigurierbar ist - beispielsweise die virtuellen Einheiten Addierer, Subtrahierer etc. zugeordnet sein. Eine virtuelle Einheit ist genau einer physikalischen Teileinheit zugeordnet, aber einer physikalischen Teileinheit können mehrere virtuelle Einheiten zugeordnet sein. Sämtliche virtuellen Einheiten werden vorzugsweise in einer Tabelle oder Liste verwaltet. Die jeweiligen Einträge enthalten neben Informationen zu den virtuellen Einheiten selbst auch Information darüber, welcher physikalischen Teileinheit die jeweiligen virtuellen Einheiten zugeordnet sind, über welche Konfigurations-Bits und wie diese physikalische Teileinheit gegebenenfalls konfiguriert werden muß, um ihr die durch die virtuelle Einheit repräsentierte Funktion zu verleihen.

Vorzugsweise wird ein kompletter Hyperblock in eine Hardware-Block-Struktur umgesetzt.

Die Umsetzung eines Befehls in eine Hardware-Block-Strukturierungsinformationen erfolgt im wesentlichen in drei Phasen.

In der ersten Phase wird zunächst ermittelt, welcher Typ von virtueller Einheit (Addierer, Subtrahierer, Multiplizierer ...) zur Ausführung der betreffenden Instruktion benötigt wird, und ob eine solche virtuelle Einheit noch verfügbar ist. Ist noch eine virtuelle Einheit des benötigten Typs frei, so wird diese oder eine von diesen zur Ausführung der betreffenden Instruktion ausgewählt. Sodann erfolgen die Konfiguration oder deren Vorbereitung und eine Reservierung der der ausgewählten virtuellen Einheit zugeordneten physikalischen Teileinheit. Zur Konfiguration werden einfach die der betreffenden physikalischen Teileinheit zugeordneten Konfigurations-Bits gesetzt oder zurückgesetzt; dies bereitet keine Schwierigkeiten, denn die Informationen, welcher physikalischen Teileinheit die ausgewählte virtuelle Einheit zugeordnet ist, über welche Konfigurations-Bits und wie diese physikalische Teileinheit gegebenenfalls zu konfigurieren ist, werden ja zusammen mit der virtuellen Einheit verwaltet. Die Reservierung der der ausgewählten virtuellen Einheit zugeordneten physikalischen Teileinheit ist notwendig, um zu verhindern, daß die betreffende physikalische Teileinheit mehrfach verwendet werden kann. Im betrachteten Beispiel wird dies dadurch bewerkstelligt, daß nach jeder Vergabe einer physikalischen Teileinheit für einen bestimmten Zweck sämtliche virtuellen Einheiten, die der betreffenden physikalischen Teileinheit zugeordnet sind, gesperrt werden.

Bei pxx-Befehlen kann es je nach dem Aufbau des Hardware-Blocks erforderlich sein, abhängig vom p-Flag eine ganz bestimmte physikalische Teileinheit (Vergleichs-Einheit) auszuwählen.

Bei bedingten Befehlen wirkt sich das p-Flag nur dann auf die Auswahl der virtuellen/physikalischen Einheit(en) aus, wenn bestimmte Instruktionen nur mit bestimmten Flags möglich sind, also keine vollständige Orthogonalität in dem Teilbefehlssatz für bedingte Befehle vorhanden ist.

In der zweiten Phase der Hardware-Block-Konfigurierung werden die den ausgewählten physikalischen Teileinheiten vorund/oder nachgeschalteten Multiplexer konfiguriert, um die Daten- und/oder Signalquellen und die Daten- und/oder Signalziele entsprechend den Festlegungen in den umzusetzenden Instruktionen einzustellen. Die Multiplexer und das Format der umzusetzenden Instruktionen sind im Idealfall so aneinander angepaßt, daß die die Daten- und/oder Signalquellen und die die Daten- und/oder Signalziele festlegenden Teile der Instruktionen unverändert als die die Multiplexer konfigurierenden Konfigurations-Bits übernommen werden können. Ist dies - aus welchem Grund auch immer - nicht möglich, können die die Multiplexer konfigurierenden Konfigurations-Bits beispielsweise einer Tabelle entnommen werden, in welcher die Zuordnung zwischen den die Daten- und/oder Signalquellen und die Daten- und/oder Signalziele festlegenden Teilen der Instruktionen und den die Multiplexer konfigurierenden Konfigurations-Bits gespeichert ist. Die Konfigurierung, die erforderlich ist, um eine Verbindung zu einer bestimmten Daten- und/oder Signalquelle und/oder zu einem bestimmten Daten- und/oder Signalziel herzustellen, ist vorzugsweise für alle Multiplexer gleich.

Eine gesonderte Behandlung ist notwendig, wenn die der auszuführenden Operation zugrundezulegenden Daten zumindest teilweise aus einer im Instruktions-Code enthaltenen Konstanten bestehen. Dann muß
- ein freies (Konstanten-)Register gesucht werden,
- dieses Register als Daten- und/oder Signalquelle verwendet werden, und
- die im Instruktions-Code enthaltene Konstante vor der Inbetriebnahme des UCB in das ausgewählte Register eingeschrieben werden.

Im betrachteten Beispiel wird vorab überprüft, ob die betreffende Konstante schon in einem (Konstanten-)Register gespeichert ist. Ergibt sich dabei, daß bereits ein die Konstante enthaltendes (Konstanten-)Register existiert, so wird dieses schon existierende (Konstanten-)Register als Datenund/oder Signalquelle verwendet.

Zu beachten ist ferner, daß die umzusetzenden Instruktionen unterschiedlich viele Daten- und/oder Signalquellen und Daten- und/oder Signalziele aufweisen und/oder von Bedingungen abhängen und insofern eine Sonderbehandlung der einzelnen Instruktionen erforderlich ist.

Als Daten- und/oder Signalziel verwendete Register werden übrigens als belegt markiert, da innerhalb eines Hyperblocks keine Zweitbelegung zulässig ist und durch ein sogenanntes (Runtime) Register Renaming, einer aus superskalaren Architekturen bekannten Technologie, verhindert werden muß.

Nach dieser (für alle Befehle gemeinsamen) zweiten Phase werden für einzelne Befehlstypen spezielle Teilschritte eingefügt, die sich aus den jeweiligen Besonderheiten ergeben.

Unter anderem muß bei bedingten Befehlen die das Vorliegen der Bedingung überprüfende Vergleichs-Einheit ermittelt werden und deren Ausgangssignal über den zugehörigen Demultiplexer auf die die Operation ausführende arithmetische Einheit geschaltet werden. Ferner ist zu berücksichtigen, welcher Art die Bedingung ist.

Bei bedingten Move-Befehlen ist zusätzlich dafür Sorge zu tragen, daß der Inhalt des Zielregisters bei Nicht-Ausführung des Befehls nicht verändert wird.

Nach der zweiten Phase der Hardware-Block-Konfigurierung könnte diese beendet und der Hardware-Block gestartet werden. Dies geschieht vorzugsweise jedoch erst nach der Ausführung der nachfolgend beschriebenen dritten Phase.

In dieser dritten Phase der Hardware-Block-Konfigurierung wird ein sogenanntes data forwarding realisiert. Dabei werden als Daten- und/oder Signalquellen nicht stur die in den Instruktionen angegebenen Daten- und/oder Signalquellen verwendet, sondern nach Möglichkeit die physikalische Teileinheit, die die betreffende Daten- und/oder Signalquelle innerhalb des jeweiligen Hyperblocks zuvor zu beschreiben hatte. Dies erweist sich in zweifacher Hinsicht als vorteilhaft: einerseits, weil eventuell weniger Register benötigt werden (wenn die in der Instruktion angegebene Daten- und/oder Signalquelle nicht als solche verwendet wird, muß sie auch nicht beschrieben werden und kann gegebenenfalls ganz weggelassen werden), und andererseits, weil die benötigten Daten bei Abholung von der diese erzeugenden Teileinheit (beispielsweise einer arithmetischen Einheit) früher verfügbar sind als wenn sie zuerst in ein Register geschrieben und von dort abgeholt werden müssen. Das data forwarding kann bei allen Befehlen zur Anwendung kommen und erweist sich im Durchschnitt als enormer Vorteil.

Das soeben kurz in Worten beschriebene Verfahren läßt sich auch durch dessen softwaremäßige und dessen hardwaremäßige Realisierungsmöglichkeiten und in mathematischer Notation veranschaulichen.

Zunächst soll eine softwaremäßige Realisierung in einer C++-ähnlichen Darstellung beschrieben werden. Im betrachteten Beispiel erfolgt die Verwaltung der Informationen zu den Hardware-Block-Konfigurationsdaten durch Klassen.

Die Klasse für eine virtuelle Einheit wird im betrachteten Beispiel folgendermaßen definiert:

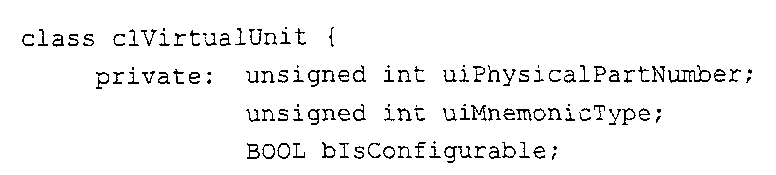

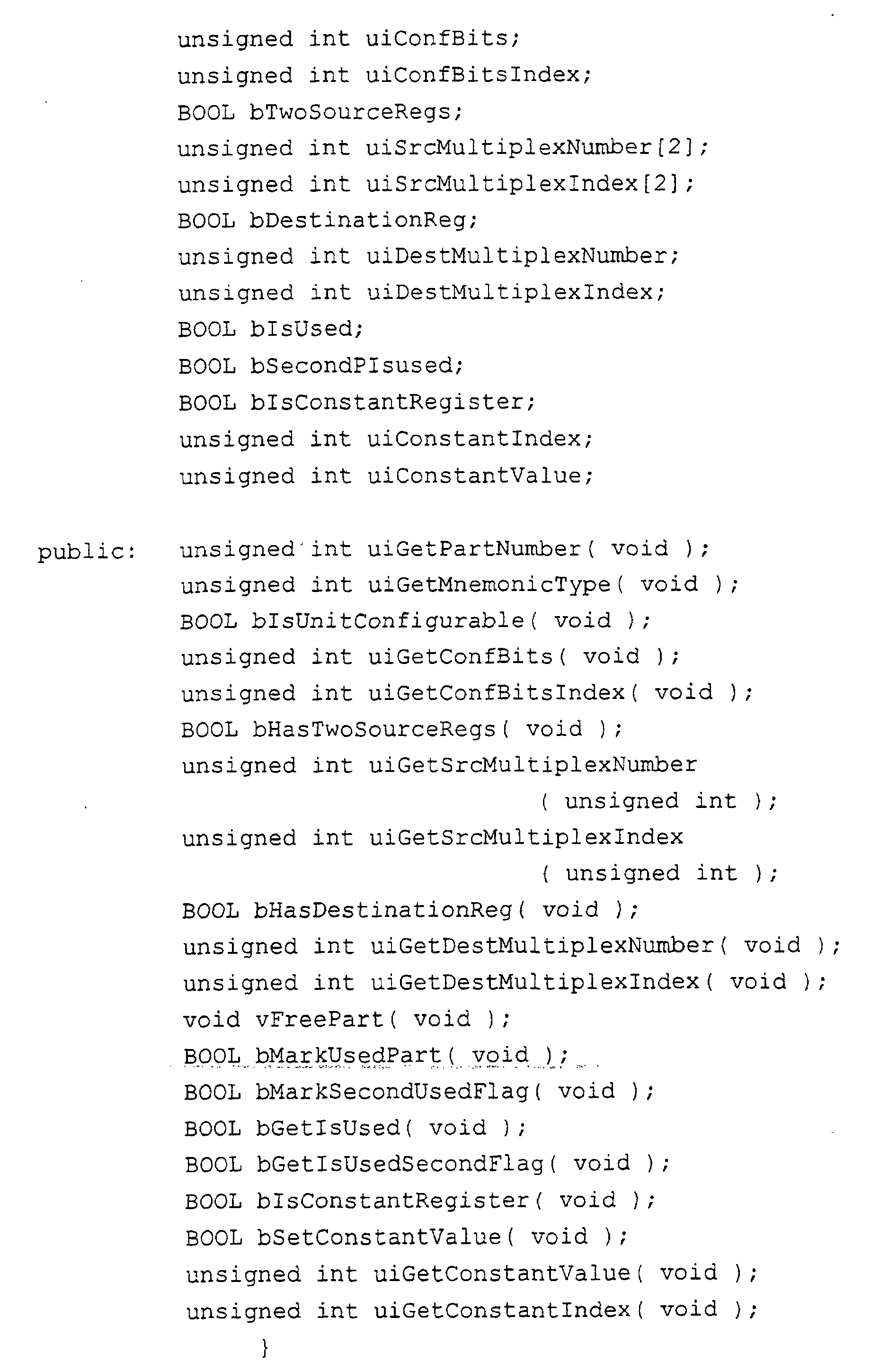

Die in der Klasse enthaltenen Daten und Methoden dienen zur Modellierung einer Mikroarchitektur.

Von den Daten bedeuten:
uiPhysicalPartNumber: Diese Variable enthält eine eindeutige Nummer für die physikalische Teileinheit innerhalb des Hardware-Blocks.
uiMnemonicType: Diese Variable enthält in codierter Form den Verknüpfungstyp, der zu der jeweiligen virtuellen Einheit gehört.
bIsConfigurable: Dieses Flag zeigt an, ob die zugehörige physikalische Teileinheit konfiguriert werden muß, um diese virtuelle Einheit zu erhalten.
uiConfBits: Falls bIsConfigurable == TRUE ist, werden hier die zugehörigen Konfigurationsbits gespeichert, um die physikalische Teileinheit für exakt diese Funktion zu konfigurieren.
uiConfBitsIndex: Falls bIsConfigurable == TRUE ist, wird der Index zur Speicherung der Konfigurationsbits im Bitstrom an dieser Stelle gespeichert.
bTwoSourceRegs: Dieses Flag wird auf TRUE gesetzt, falls für den betreffenden Befehl zwei Sourceregister angegeben werden müssen, ansonsten auf FALSE.
uiSrcMultiplexNumber[2]: Bei zwei Sourceregistern werden die physikalischen Nummern der zugehörigen Multiplexer in dieser Variablen gespeichert, gegebenenfalls ist nur die Variable mit dem Index 0 gültig.
uiSrcMultiplexIndeX[2]: Hier werden die Indizes der Multiplexer für die Sourceregister gespeichert.
bDestinationReg: Dieses Flag wird auf TRUE gesetzt, falls für den betreffenden Befehl ein Destinationregister (nicht - flag!) angegeben werden muß, ansonsten auf FALSE.
uiDestMultiplexNumber: Hier wird die physikalische Nummer des zugehörigen Multiplexers für das Zielregister gespeichert.
uiDestMultiplexIndex: Hier wird der Index des Multiplexer für das Destinationregister gespeichert.
bIsUsed: In diesem Flag wird gespeichert, ob diese virtuelle (und damit zugleich die physikalische) Teileinheit benutzt wurde. Ein Setzen dieses Flags auf TRUE bedeutet, daß diese Teileinheit nicht mehr genutzt werden kann (außer bei den bedingten Move-Befehlen (movep)).
bSecondPIsUsed: Für den Sonderfall der movep-Befehle wird in diesem Flag die zweite Nutzung eines p-Flags einschließlich des Vergleichs gespeichert. Sind bIsUsed und bSecondPIsUsed auf TRUE gesetzt, ist der dynamische Wegmultiplexer (AU), auf den ein movep-Befehl abgebildet wird, zur weiteren Nutzung gesperrt.
bIsConstantRegister: Dieses Flag zeigt an, daß die physikalische Teileinheit einem Konstantenregister entspricht (TRUE) oder nicht (FALSE).
uiConstantIndex: Im Fall eines Konstantenregisters muß der Wert der Konstanten, der gespeichert und genutzt werden soll, im Bitstrom eingetragen werden. In diesem Fall ist der Index im Bitstrom in dieser Variablen gespeichert. uiConstantValue: Der Wert, der im Konstantenregister gespeichert wird, wird für weitere Vergleiche zusätzlich in dieser Variablen der Instanz gespeichert.

Die in einer Instanz dieser Klasse auftretenden Variablen müssen alle zum Zeitpunkt des Starts der Konfiguration belegt werden. Hierzu werden hier nicht explizit aufgeführte Methoden benutzt, die im Konstruktor einer nachfolgend erläuterten Configurable-Block- bzw. CB-Klasse genutzt werden, um alle für die Umsetzung notwendigen Informationen in die Instanz zu schreiben und zugleich die Flags bIsUsed und bSecondPIsUsed auf FALSE zu setzen. Während der Lebenszeit dieser Instanz ändern sich dann nur noch diese beiden Flags, die über vordefinierte Methoden mit dem Wert TRUE bzw. FALSE belegbar sind, sowie - im Fall eines Konstantenregisters - die Variable uiConstantValue, in der der aktuelle Wert des Registers für weitere Vergleiche zwischengespeichert wird.

Von den Methoden der vorstehend definierten Klasse für die virtuellen Einheiten bedeuten:
unsigned int uiGetPartNumber( void ): Diese Methode gestattet den lesenden Zugriff auf die Nummer der zur virtuellen Teileinheit gehörenden physikalischen Teileinheit; die Nummer wird als Rückgabewert zurückgeliefert.
unsigned int uiGetMnemonicType( void ): Diese Methode gestattet den lesenden Zugriff auf Mnemonic, der in der virtuellen Einheit implementiert werden kann.
BOOL bIsUnitConfigurable( void ): Diese Methode liefert TRUE, falls die physikalische Teileinheit konfiguriert werden muß. Unter diesen Umständen sind die Einträge in uiConfBits und uiConfBitslndex gültig und können mit den folgenden Methoden uiGetConfBits() und uiGetConfBitsIndex() erhalten werden. Ferner müssen alle anderen virtuellen Teileinheiten, die zur gleichen physikalischen Einheit gehören, ebenfalls gesperrt werden. Für den Rückgabewert FALSE hingegen sind virtuelle und physikalische Einheit identisch.
unsigned int uiGetConfBits( void ): Durch diese Methode werden die Konfigurationsbits gelesen und als Rückgabewert zurückgeliefert. Diese Werte sind nur gültig, wenn bIsConfigurable den Wert TRUE besitzt.
unsigned int uiGetConfBitsIndex( void ): Durch diese Methode wird der Index im Bitstrom für die Konfigurationsbits gelesen und als Rückgabewert zurückgeliefert. Dieser Wert ist nur gültig, wenn bIsConfigurable den Wert TRUE besitzt.
BOOL bHasTwoSourceRegs( void ): Ein Aufruf dieser Methode liefert den Wert TRUE, falls diese Operation zwei Sourceregister besitzt und diese in die entsprechenden Multiplexer einzutragen sind, ansonsten den Wert FALSE.
unsigned int uiGetSrcMultiplexNumber( unsigned int ): Diese Methode liefert die Nummer der physikalischen Teileinheit, die den Multiplexer für die Sourceregister darstellt. Aufrufparameter ist der Index in dem Array von 2 Einträgen, wobei der Index 1 nur gültige Werte liefert, falls das Flag bHasTwoSourceRegs den Wert TRUE besitzt.
unsigned int uiGetSrcMultiplexIndex( unsigned int ): Diese Methode liefert den Index zum Eintrag in den Bitstrom, um die Konfigurierung des Multiplexers für die Sourceregister vornehmen zu können. Aufrufparameter ist der Index in dem Array von 2 Einträgen, wobei der Index 1 nur gültige Werte liefert, falls das Flag bHasTwoSourceRegs den Wert TRUE besitzt.
BOOL bHasDestinationReg( void ): Ein Aufruf dieser Methode liefert den Wert TRUE, falls diese Operation ein Destinationregister besitzt und dies in den entsprechenden Multiplexer einzutragen ist, ansonsten den Wert FALSE.
unsigned int uiGetDestMultiplexNumber( void ): Diese Methode liefert die Nummer der physikalischen Teileinheit, die den Multiplexer für das Destinationregister darstellt. Der Rückgabewert ist nur gültig, falls das Flag bHasDestinationReg den Wert TRUE besitzt.
unsigned int uiGetDestMultiplexlndex( void ): Diese Methode liefert den Index zum Eintrag in den Bitstrom, um die Konfigurierung des Multiplexers für das Destinationregister vornehmen zu können. Der Rückgabewert ist nur gültig, falls das Flag bHasDestinationReg den Wert TRUE besitzt.
void vFreePart( void ): Diese Methode löscht alle Belegungsflags, indem diese mit dem Wert FALSE belegt werden. Hierin erfolgt also ein schreibender Zugriff auf die Flags.
BOOL bMarkUsedPart( void ): Das Belegtflag bIsUsed wird über diese Methode auf TRUE gesetzt. Rückgabewert ist TRUE, falls die Operation erfolgreich war, FALSE, falls dieses Element bereits belegt war.
BOOL bMarkSecondUsedFlag( void ): Das zweite Belegtflag bSecondPIsUsed wird entsprechend auf TRUE gesetzt. Rückgabewert ist auch hier TRUE, falls die Operation erfolgreich war, FALSE, falls dieses Element bereits belegt war.
BOOL bGetIsUsed( void ): Diese Methode liefert als Rückgabewert den Wert der Variablen bIsUsed.
BOOL bGetIsUsedSecondFlag( void ): Diese Methode liefert als Rückgabewert den Wert der Variablen bSecondPIsUsed.
BOOL bIsConstantRegister( void ): Diese Methode gibt TRUE zurück, falls die virtuelle Teileinheit einem Konstantenregister entspricht, ansonsten FALSE.
BOOL bSetConstantValue( void ): Mit Hilfe dieser Methode kann der aktuelle Konstantenwert in der Variablen uiConstantValue gespeichert werden, falls diese virtuelle Einheit einem Konstantenregister entspricht und dieses bisher noch nicht belegt wurde. Rückgabewert ist TRUE für Erfolg, FALSE sonst.
unsigned int uiGetConstantValue( void ) : Mit Hilfe dieser Methode wird der gespeicherte Konstantenwert zurückgegeben.
unsigned int uiGetConstantIndex( void ): Der Index in den Bitstrom, der für die Speicherung des Konstantenwerts dort notwendig ist, wird über diese Methode erhalten.

Für die Modellierung eines Hardware-Blocks (CBs) wird eine zweite Klasse definiert, die u.a. Instanzen der Klasse clVirtualUnit sowie weitere Variablen und Methoden enthält. Zur Vereinfachung wird eine Speicherung der Elemente in einem statischen Array angenommen; eine verkettete Liste ist natürlich ebenfalls denkbar. Es sei an dieser Stelle angemerkt, daß für die hier angegebenen Klassen nur ein Teil der Methoden dargestellt wird.

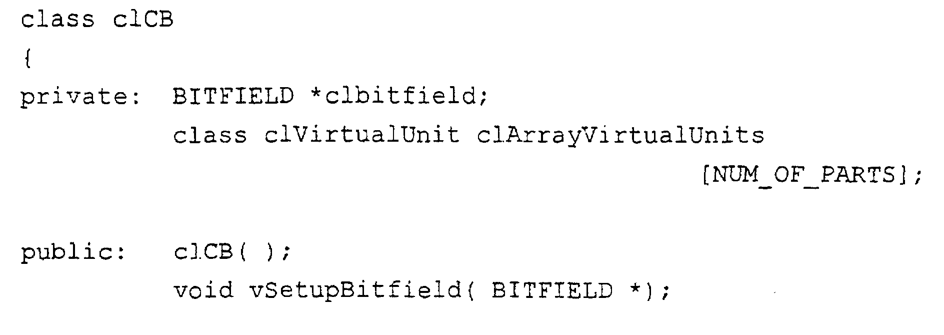

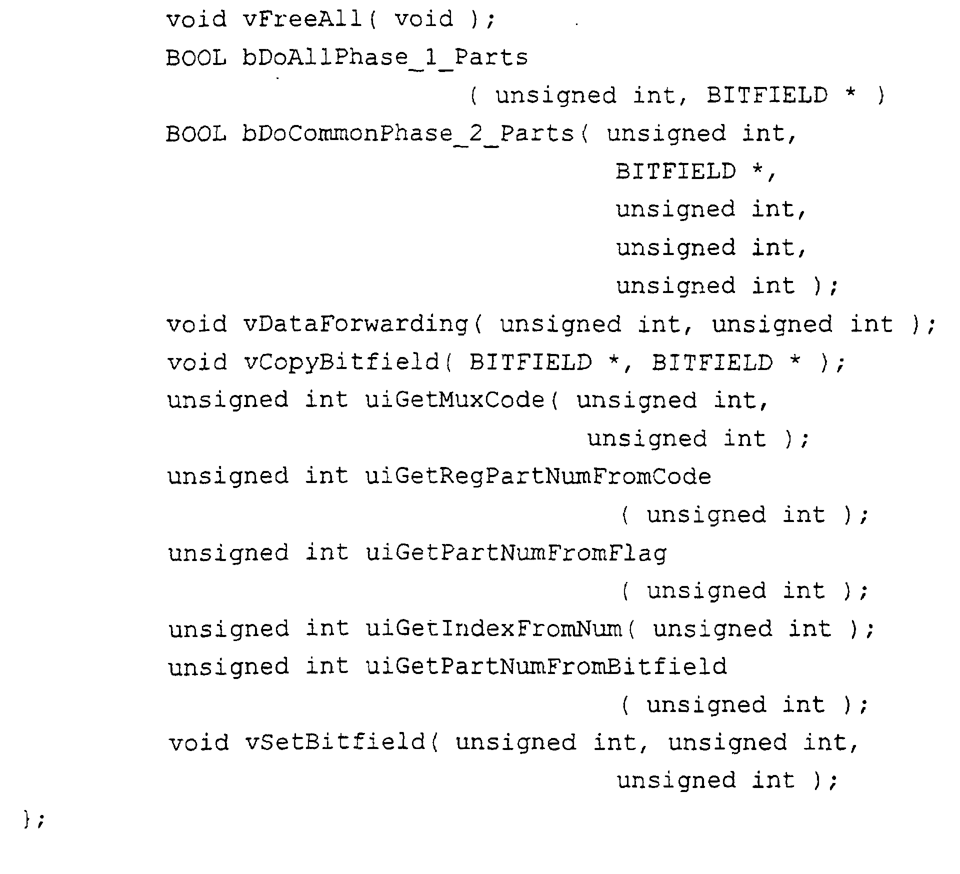

Die Variablen und Methoden der Klasse clCB bedeuten im einzelnen:
BITFIELD *clBitfield: Diese Variable entspricht dem zu generierenden Bitstrom für eine Laufzeitkonfiguration des CB.
class clVirtualUnit clArrayVirtualUnits[NUM_OF_PARTS]: Dieses Array von Instanzen der Klasse clVirtualUnit enthält alle Informationen für alle virtuellen Einheiten und somit auch für alle physikalischen Teileinheiten.
clCB(): Dieser Konstruktor wurde aufgeführt, um zu verdeutlichen, worin die Aufgaben dieser Klasse bestehen. In einer Startphase müssen sowohl das Bitfeld als auch alle Instanzen der Klasse clVirtualUnit, die im Array clArrayVirtualUnits[] zusammengefaßt werden, initialisiert werden. Zur Initialisierung der Klasseninstanzen zählen insbesondere das Beschreiben aller Konfigurationsdaten sowie das Rücksetzen aller Flags, um in der Betriebsphase auf die notwendigen Daten lesend zugreifen zu können.
void vSetupBitfield( BITFIELD * ): In dieser Methode wird das Bitfeld mit allen Vorbelegungen versorgt.
void vFreeAll( void ) : Diese Methode wird zum Löschen aller Belegtflags in dem Array clArrayVirtualUnits[] aufgerufen.
BOOL bDoAllPhase_1_Parts(unsigned int, BITFIELD * ): In dieser Methode sind alle Teile zur Phase 1 zusammengefaßt. Sie wird aufgerufen, nachdem eine freie Teileinheit zur Aufnahme des Mnemonics gefunden wurde und enthält die Markierung aller zugehörigen virtuellen Einheiten als besetzt, Bestimmung der Konfigurationsbits und des Index in den Bitstrom und Eintragung in einen temporären Bitstrom. Parameter sind der Index in dem Array der virtuellen Einheiten und der Zeiger auf den temporären Bitstrom. Der Rückgabewert TRUE zeigt eine erfolgreiche Phase 1 an, FALSE den Mißerfolg (etwa durch nicht ausreichende Netzressourcen).
BOOL bDoCommonPhase_2_Parts( unsigned int, BITFIELD *, unsigned int, unsigned int, unsigned int): Diese Methode faßt die für alle Befehlsgruppen gemeinsamen Methoden zusammen. Hierzu zählen die Einträge für die Source- und Destinationregister einschließlich der Behandlung der Konstanten als Eingabewerte. Rückgabewert ist TRUE für Erfolg und FALSE für Mißerfolg.
void vDataForwarding( unsigned int, unsigned int): Die Berechnung des Data Forwarding mit allen zugehörigen Methoden ist in dieser Methode integriert. Die Vorgehensweise betrifft die Sourceregister, deren physikalische Nummer in den Parametern übergeben werden. Unter Nutzung weiterer Methoden wird ermittelt, ob ein Sourceregister bereits ein früheres Destinationregister war. Ist dies der Fall, wird die letzte berechnende AU aus dem Bitstrom ermittelt und anstelle des Registers eingetragen.
void vCopyBitfield( BITFIELD *, BITFIELD *): Diese Methode verknüpft die Eintragung in dem zweiten Bitstrom mittels ODER mit denen des ersten und speichert das Ergebnis im ersten Bitstrom. Hierdurch wird das temporäre Zwischenergebnis im zur späteren Konfiguration berechneten Bitstrom gespeichert.
unsigned int uiGetMuxCode(unsigned int, unsigned int): Diese Methode berechnet die Konfigurationsbits, die für einen Multiplexer in den Bitstrom zu laden sind, um als Quelle eine physikalische Teileinheit auszuwählen. Parameter dieser Methode sind die physikalische Nummer des Multiplexers sowie der Quelleinheit. Diese Methode ist unbedingt notwendig zur Konfiguration, da in der Beschreibung der virtuellen Einheiten zwar der Index des Eintrags, nicht jedoch der Eintrag selbst gespeichert wird. Diese Methode kann für ein vollständiges Netzwerk als tabellengestützte Umrechnung gegebenenfalls ohne Berücksichtigung der Multiplexernummer implementiert sein, da in diesem Fall alle Multiplexer auf einheitliche Weise konfigurierbar sind. Für partielle Netzwerke muß hier größerer Aufwand betrieben werden, insbesondere kann eine Vernetzung unmöglich sein. Rückgabewert sind die Konfigurationsbits im Erfolgsfall bzw. eine sonst ungenutzte Codierung für den Fall des Mißerfolgs.
unsigned int uiGetRegPartNumFromCode(unsigned int): Diese Methode berechnet die Nummer der Teileinheit aus dem Code in der Instruktion. Dies kann naturgemäß nur für Register erfolgen, wobei im Fall einer Konstanten die beschriebene Vorgehensweise in dieser Methode integriert ist, die zur Speicherung der Konstanten und zur Rückgabe der physikalischen Nummer des Konstantenregisters führt. Rückgabewerte sind die Nummer der Teileinheit im Erfolgsfall, ansonsten eine nicht benutzte Kennung für den Mißerfolg.
unsigned int uiGetPartNumFromFlag(unsigned int): Für die Umrechnung einer Flagnummer in die Nummer der physikalischen Teileinheit ist diese Methode zuständig. Aufrufparameter ist das p-Feld in dem Instruktionsformat, Rückgabewert die Teileinheitsnummer oder eine besondere Kennung im Fall des Mißerfolgs.
unsigned int uiGetIndexFromNum(unsigned int): Mit Hilfe dieser Methode wird der Index in den Bitstrom für eine Teileinheit mit bekannter physikalischer Nummer (als Parameter) berechnet und zurückgegeben. Diese Berechnung kann in Tabellenform erfolgen.
unsigned int uiGetPartNumFremBilfield(unsigned int): Diese Methode liest den Eintrag in dem Bitfeld an dem als Parameter übergebenen Index und rechnet die erhaltene Konfigurationsmaske in die physikalische Nummer der Teileinheit zurück, die als Ergebnis zurückgegeben wird. uiGetPartNumFromBitfield wird im Data Forwarding eingesetzt, wo der Datenweg von einem früheren Zielregister auf die das Ergebnis bestimmende Teileinheit zurückverfolgt wird, damit die Daten vorzeitig verwendbar sind.
void vSetBitfield( unsigned int, unsigned int, unsigned int): Diese Methode wird mit drei Parametern aufgerufen: Der Index der Eintrags, die Länge des Eintrags und die Maske. Der Aufruf bewirkt den Eintrag in dem Bitfeld an der entsprechenden Stelle.

Mit den vorstehend genannten und erläuterten Variablen und Methoden ergibt sich folgender Pseudocode für das Verfahren zur der auf Befehlen oder Befehlsfolgen basierenden Konfigurierung eines Hardware-Blocks der in der Figur 12 dargestellten Art (für die struktur-prozedurale Programmierung):

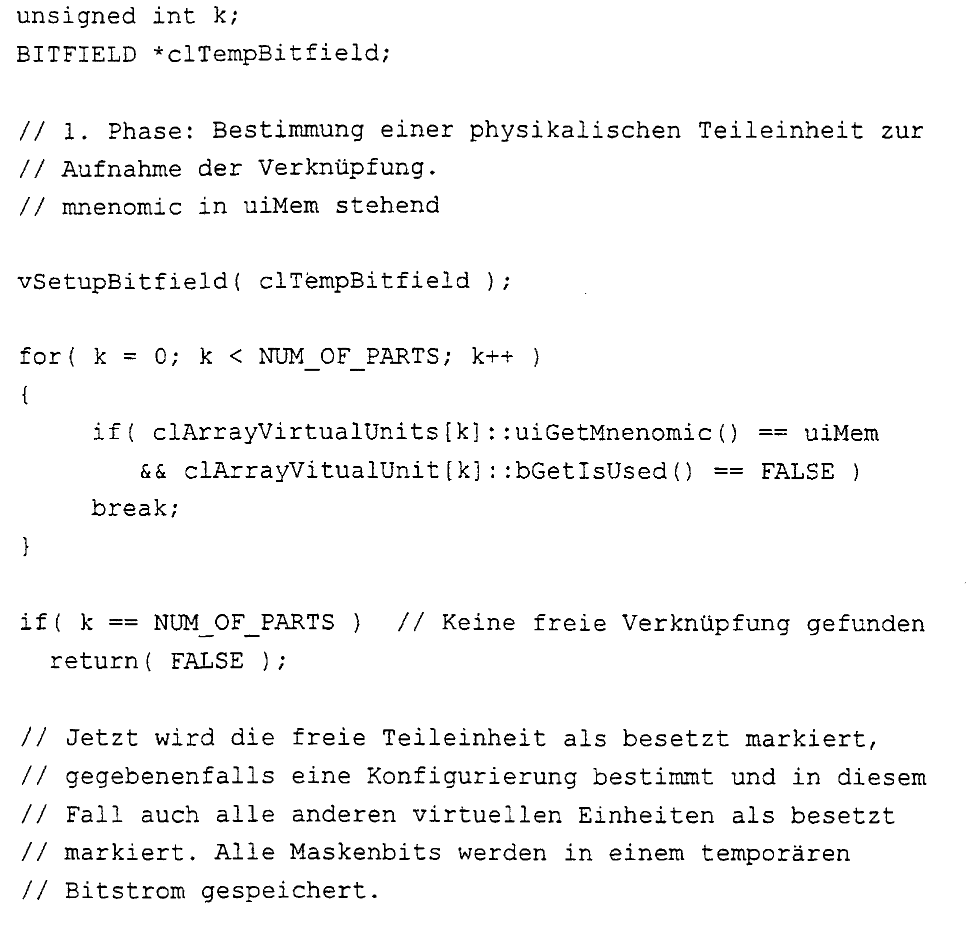

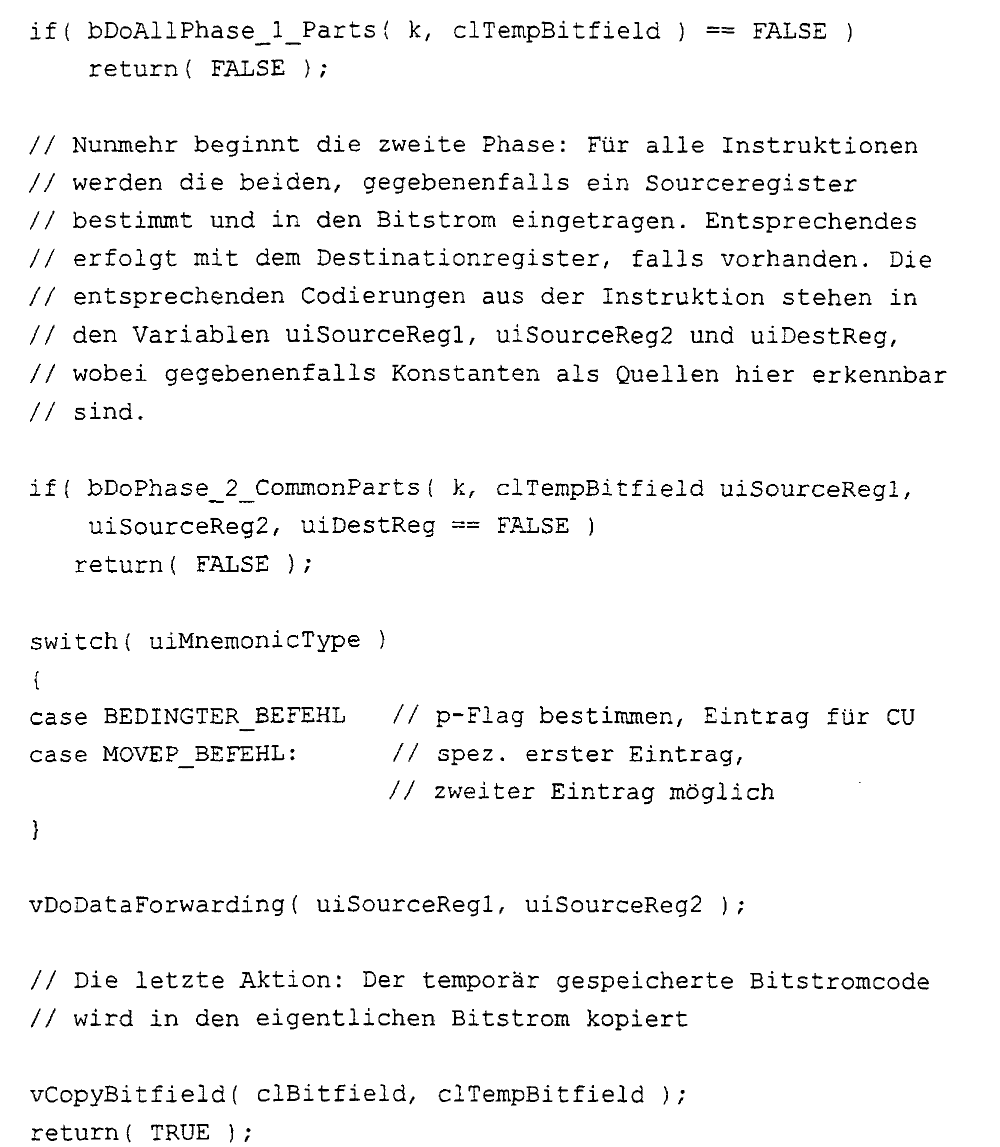

Die vorstehende zentrale Routine wird für jede Instruktion, die übersetzbar ist, aufgerufen. Rückgabewert ist TRUE, falls die Umsetzung gelungen ist, ansonsten FALSE. Im letzteren Fall muß die Instruktion im aufrufenden Programm behalten werden, da sie nicht eingefügt wurde, und der Bitstrom kann zur Ausführung geladen werden. Das Ende einer Umsetzung wird also durch das Erschöpfen der Ressourcen angezeigt oder durch eine nicht-übersetzbare Instruktion wie beispielsweise einen Branchbefehl erhalten.

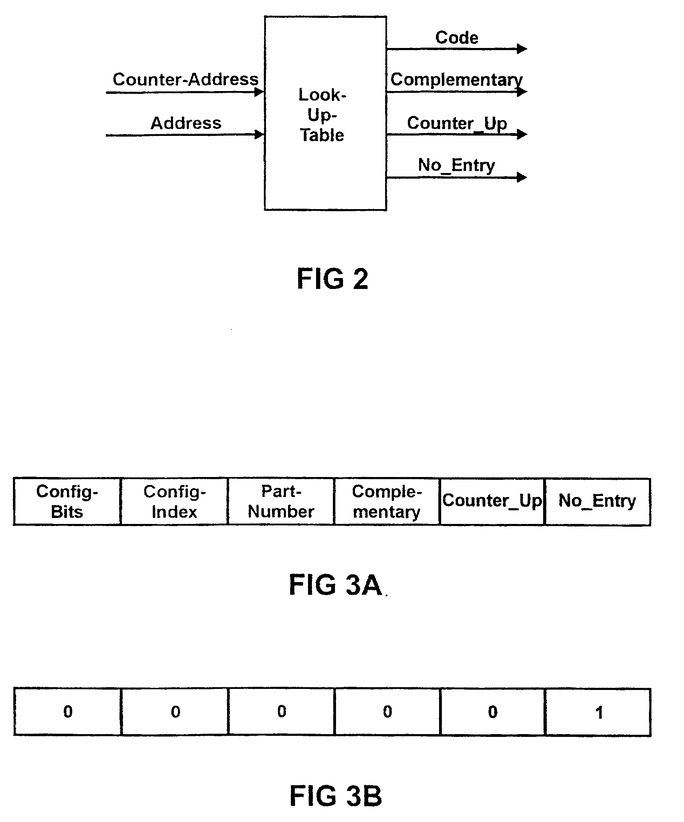

Wie vorstehend bereits erwähnt wurde, läßt sich die struktur-prozedurale Programmierung nicht nur softwaremäßig, sondern auch hardwaremäßig realisieren. Eine mögliche Ausführungsform einer hardwaremäßigen Realisierung wird nachfolgend unter Bezugnahme auf die Figuren 2 bis 10 erläutert. Dabei wurde versucht, die einzelnen Phasen so weit wie möglich parallel durchlaufen zu lassen.

Die bei der softwaremäßigen Realisierung vorkommenden tabellengestützten Umrechnungen werden bei der hardwaremäßigen Realisierung als sogenannte Look-Up-Tables (LUTs) realisiert. LUTs sind dazu ausgelegt, im Ansprechen auf die Eingabe von Daten von diesen abhängende Daten auszugeben. Solche LUTs können beispielsweise durch ein EPROM oder eine andere Speichereinrichtung gebildet werden. Die eingegebenen Daten werden dann als Adresse verwendet, und die ausgegebenen Daten sind die unter dieser Adresse gespeicherten Daten.

Für die erste Phase wird eine LUT der in der Figur 2 veranschaulichten Art verwendet. Diese LUT weist zwei Eingänge (Address, Counter_Address) und vier Ausgänge (Code, Complementary, Counter_Up, No_Entry) auf. Die zwei Eingänge dienen der Adressierung der LUT, wobei die über den einen Eingang (Address) zugeführten Daten und/oder Signale vom zu übersetzenden Code abhängen, und wobei die über den anderen Eingang (Counter_Address) zugeführten Daten und/oder Signale Zählstände eines durch den Ausgang Counter_Up hochzählbaren Zählers (Zähler-Arrays) sind. Die Ausgänge dienen zur Ausgabe des übersetzten Codes (Code), von Signalen zum Hochzählen des die Counter_Address generierenden Zählers oder Zähler-Arrays (Counter_Up), eines Signals zur Signalisierung für den Fall,
daß kein gültiger und freier Eintrag mehr vorliegt (No_Entry), und eines für die Bearbeitung bedingter Move-Befehle (movep) benötigten Signals (Complementary), wobei sich der übersetzte Code aus Konfigurations-Bits (Config-Bits), einem Konfigurationsindex (Config-Index), und einer Teilenummer (Part-Number) zusammensetzt. Die Look-Up-Table-Einträge haben damit für den ersten Teil das in Figur 3A gezeigte Format.

Der erwähnte Zähler (das Zähler-Array) wird als Markierungsmittel (besetzt, schreibend) verwendet, wobei für jeden Operations-Typen (Addition, Subtraktion ...) ein separater Zähler existiert. Der Zählstand der Zähler gibt an, die wievielte Möglichkeit zur Ausführung des zugeordneten Operations-Typs in Anspruch genommen werden kann. Die Tiefe der Zähler innerhalb dieses Zähler-Arrays hängt von der Anzahl der Möglichkeiten zur Ausführung der betreffenden Operation ab. Sind beispielsweise drei Additionsmöglichkeiten vorhanden, beträgt die Zählertiefe zwei Bit; in der korrespondierenden LUT, die ja von dem Mnemonic-Code und dem Zählerstand adressiert wird, wird dann allerdings an der 4. Stelle (Zählerstand 3) eine NO_ENTRY-Codierung stehen, um das Fehlen dieser Operation anzuzeigen; ein derartiger LUT-Eintrag ist in Figur 3B veranschaulicht.

Die besagten Zähler sind im betrachteten Beispiel Binärzähler mit asynchronem Reset und Enable. Ein 2-Bit-Binärzähler dieser Art ist im betrachteten Beispiel wie folgt codiert; die Darstellung erfolgt in dem bei DNF (Disjunktive Normal-Form)-Logiken gebräuchlichen DNF-Format. Zähler dieser Art werden im folgenden als Zähler eines ersten Typs bezeichnet.
BIT b0, b1:OUT;
BIT reset, enable:IN;
BIT clock:IN;
b0 = /b0 * enable + b0 * /enable;
b0.clk = clock;
b0.areset = reset;
b1 = /b1 * b0 * enable + b1 * /b0 * enable + b1 * /enable;
b1.clk = clock;
b1.areset = reset;

Parallel zu diesen Zählern muß für die bedingten Befehle ein Speicherarray implementiert sein, um den Code des Bedingungsflags speichern zu können. Dies ist, wie vorstehend bereits erläutert wurde, zur Zusammensetzung von Movep-Befehlen notwendig. Da es nur eine CU-Instanz pro Flag geben kann (im Gegensatz zu den AUs gibt es zwar im allgemeinen mehrere Flags, die sich jedoch alle durch die Bezeichnung des Bits unterscheiden), besteht der Binärzähler aus zwei Bits, von denen das erste die Erstbelegung, und das zweite die Komplementärbelegung anzeigt. Die Identifizierung der korrekten CU erfolgt anhand der p-Bits aus dem Befehl.

Die 2-Bit-Binärzähler für bedingte Move-Befehle sind im betrachteten Beispiel wie folgt codiert; die Darstellung erfolgt wiederum in dem bei DNF(Disjunktive Normal-Form)-Logiken gebräuchlichen DNF-Format. Zähler dieser Art werden im folgenden als Zähler eines zweiten Typs bezeichnet.
BIT b0, b1:OUT;
BIT reset, enable:IN;
BIT clock:IN;
b0 = /b0 * enable + b0;
b0.clk = clock;
b0.areset = reset;
b1 = /b1 * b0 * enable + b1;
b1.clk = clock;
b1.areset = reset;

Für die Fälle, in denen Entscheidungen getroffen werden müssen, die in Datenpfade umgesetzt werden, wird eine spezielle Logik integriert.

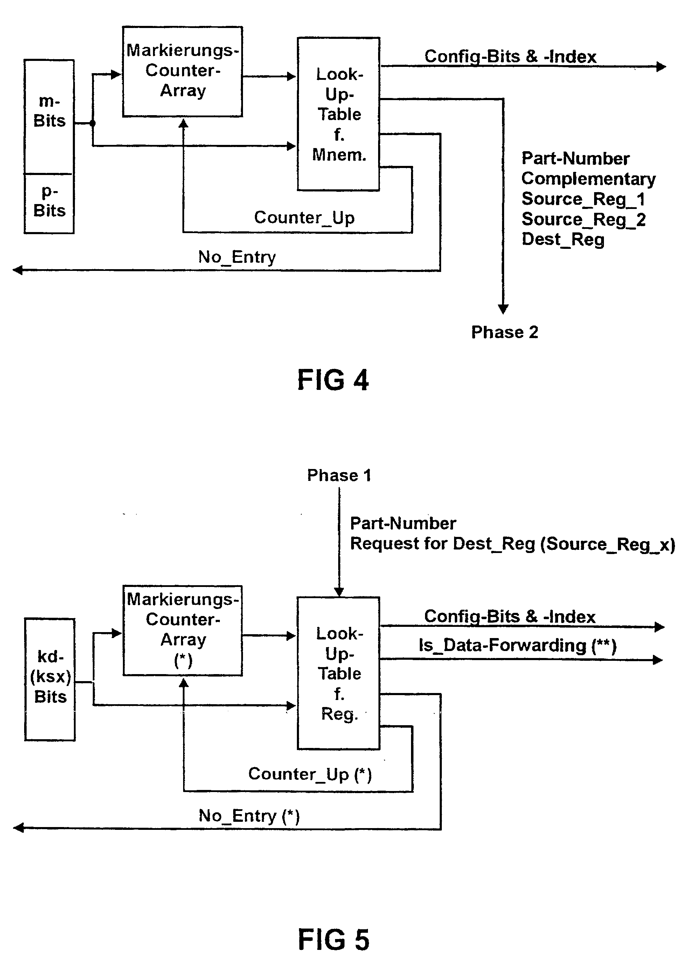

Für die 1. Phase des Verfahrens zur Hardware-Block-Strukturierung ergibt sich nach alledem die in Fig. 4 gezeigte Realisierung.

Für alle Befehle mit Ausnahme der bedingten Movep-Instruktionen wird pro arithmetischer Einheit AU bzw. pro Vergleichs-Einheit CU eine Zählerinstanz nach Art des vorstehend erläuterten Zählers des ersten Typs benötigt. Ein solcher Zähler genügt, da nur ein einfaches Belegt-Signal benötigt wird. Die Movep-Anweisungen hingegen benötigen einen Zähler des zweiten Typs, der in zwei Bits die teilweise (b0) und die vollständige (b1) Belegung signalisiert. Bedingte Movep-Instruktionen, die zum zweiten Mal auf das gleiche Flag referenzieren, müssen dieses in (im Vergleich zur ersten Referenz) invertierter Form vornehmen und werden dann in der entsprechenden AU als zweite Quelle eingetragen, während das erste Quellregister unverändert bleibt. Dieses Verfahren ist in einer LUT integrierbar; Referenzen auf die nicht invertierten Bedingungen werden durch eine No_Entry-Signalisierung abgebrochen.

Die zweite Phase umfaßt die Bestimmung der Register, die für die betreffende Operation als Daten- und/oder Signalquelle(n) und Daten- und/oder Signalziel zu verwenden sind. Dies erfolgt für alle drei möglichen Register in paralleler und weitgehend identischer Form. Die Codierung des jeweiligen Registers innerhalb der Instruktion wird - falls das betreffende Feld einen gültigen Eintrag enthält - durch eine Look-Up-Table in eine Maske für den Bitstrom zusammen mit dem Index in den Bitstrom umgesetzt.

Das Blockschaltbild einer Schaltung zur Bestimmung und Codierung der als Daten- und/oder Signalquelle(n) und Datenund/oder Signalziel zu verwendenden Register ist in Figur 5 veranschaulicht; die Identifizierung, welche der Register tatsächlich umgesetzt werden (müssen), erfolgt im betrachteten Beispiel durch die Steuerleitungen Source_Reg_1, Source_Reg_2, und Dest_Reg (siehe Figuren 4 und 5).

Source- und Destinationregister werden unterschiedlich behandelt. Im Fall eines Destinationregisters wird der Eintrag markiert, um eine Zweitbelegung identifizieren zu können (Signal No_Entry) und um ein Data Forwarding zu triggern. Diese Signale entfallen für Sourceregister. Hier wird eine "straight-forward"-Generierung des Bitstromeintrags durchgeführt, wobei allerdings die Generierung des Codes im Fall einer Konstanten entfällt und auf die nachfolgend beschriebene Stufe verlagert wird.

In der Figur 5 ist markiert, was ausschließlich für Sourceregister und ausschließlich für Destinationregister relevant ist: mit (*) gekennzeichnete Teile sind nur für Destinationregister bestimmt, und mit (**) gekennzeichnete Teile sind nur für Sourceregister bestimmt.

Für eine Konstante, die innerhalb der Codierung anstelle eines Sourceregisters auftreten kann, wird ein paralleler Weg durchgeführt, der die Konstante mit den Inhalten aller Konstantenregister parallel zueinander vergleicht, und - bei Ungleichheit - das nächstfreie Register (Zeigerverwaltung durch einen Zähler) mit der Konstanten belegt und dieses Register als Codierung zurückliefert oder - bei Gleichheit - die Codierung des die Konstante enthaltenden Konstantenregisters als Codierung zurückliefert.

Die Look-Up-Table wird zu diesem Zweck so gestaltet, daß sie bei einem positiven Vergleich unmittelbar die Codierungsnummer des betreffenden Registers zum Bitfeld liefert, während im Fall einer Nichtübereinstimmung zusätzlich die Konstante gespeichert und der Registerzähler erhöht wird. Das No_Entry-Signal wird für den Fall einer Belegung aller Konstanten aktiv und beendet den Algorithmus für einen Instruktionsblock, da die Ressourcen erschöpft, sind. Es sollte zudem beachtet werden, daß die Konstantenregister ein Teil des (Main-)Bitstroms sind, da sie aus vorhergehenden Zyklen bereits belegt sein können und zum Laden des Instruktionsblocks benötigt werden.

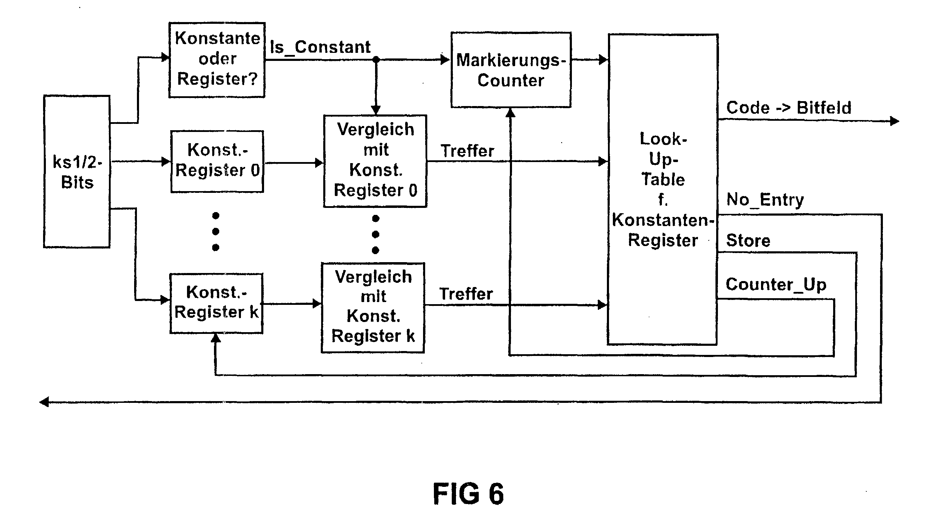

Das Blockschaltbild einer Schaltung zur Zuordnung der Konstantenregister ist in Figur 6 veranschaulicht.

Für Sourceregister wird das bereits mehrfach erwähnte Data Forwarding durchgeführt. Anhand der Eintragung in das Belegtflag des Registers, die anzeigt, daß dieses Register in diesem Zyklus bereits Zielregister war, wird entschieden, ob tatsächlich das Sourceregister oder die Eintragung, die als Quelle für das Zielregister ermittelbar ist, als neue Quelle in den Bitstrom eingetragen wird.

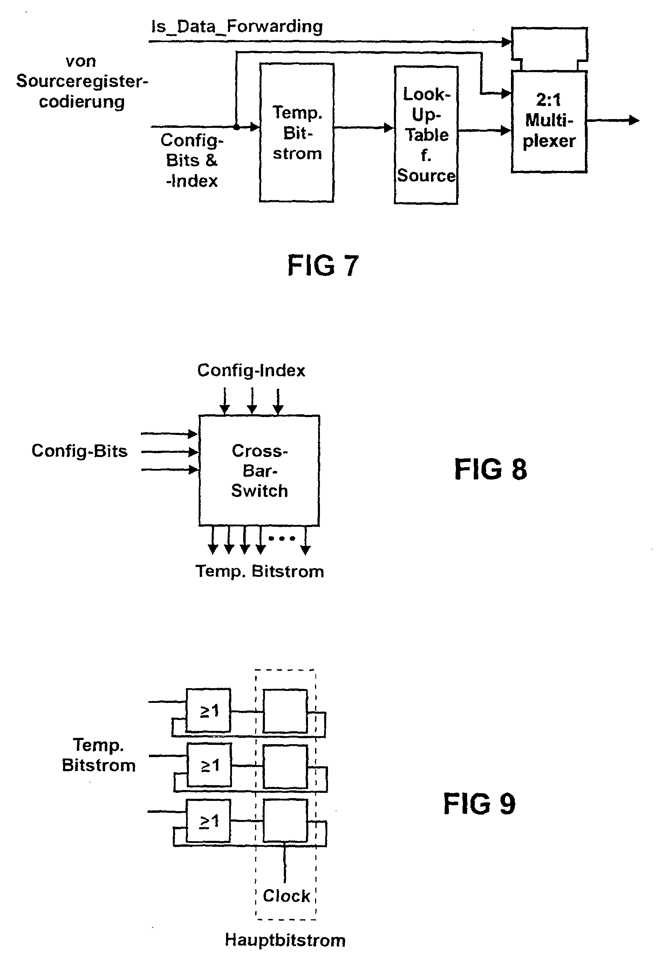

Das Blockschaltbild einer hierzu geeigneten Schaltung ist in Figur 7 dargestellt.

Die im Figur 7 per LUT durchgeführte Umcodierung der neuen Quelle kann entfallen, falls alle Quellen innerhalb des Netzwerks identisch codiert werden. Dieser Fall, der für ein vollständiges Netzwerk angenommen werden kann, führt dazu, daß die im temporären Bitstrom stehende Eintragung der Quelle für das (frühere) Zielregister als neue Quell-Codierung für die jetzige Operation anstelle des in der Instruktion codierten Quellregisters eingetragen wird. Die Auswahl erfolgt in jedem Fall durch einen über das Signal Is_Data-Forwarding (siehe Figur 5) angesteuerten Multiplexer.

Führen alle Operationen zum Erfolg (dies ist anhand des Auftretens keiner No_Entry-Signalisierung erkennbar), wird der temporäre Bitstrom beim Schreibtakt mit dem vorhandenen Hauptbitstrom ODER-verknüpft und in diesen zurückgeschrieben.

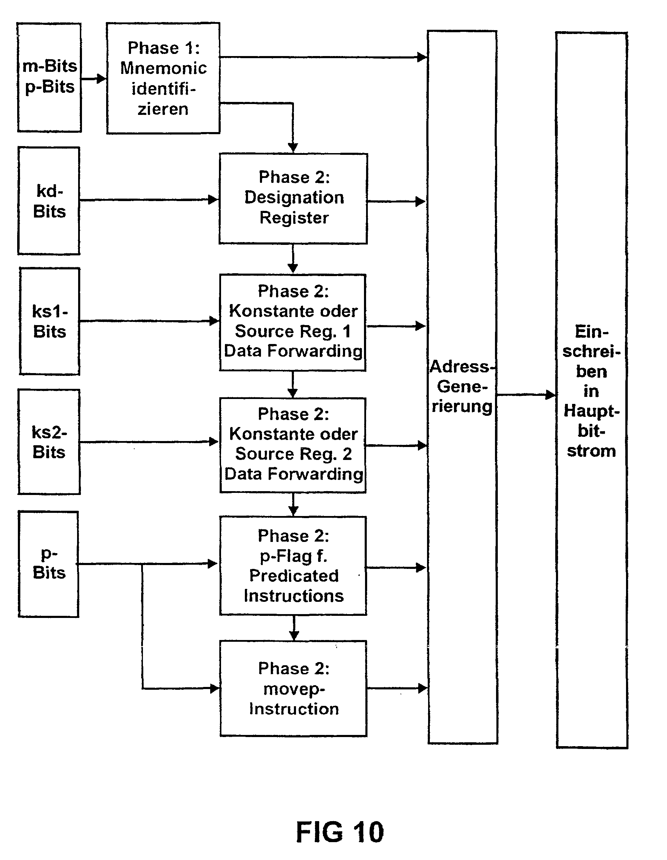

Die Figuren 8 und 9 zeigen Blockschaltbilder zum Einschreiben von Konfigurationsdaten in den temporären Bitstrom und in den Hauptbitstrom (main bitstream).

Wie aus der Figur 8 ersichtlich ist, erfolgt das Einschreiben von Konfigurationsdaten in den temporären Bitstrom über sogenannte Cross-Bar-Switches. Cross-Bar-Switches sind allgemein bekannt und bedürfen keiner näheren Erläuterung. Sie leiten die Konfigurationsbits (Config-Bits) an die durch den Config-Index definierten Stellen im temporären Bitstrom, wobei unbelegte Ausgänge des Cross-Bar-Switch mit einem vorbestimmten Wert (beispielsweise "0") belegt sind. Für die mnemonicbasierte Auswahl einer physikalischen Teileinheit, die Konfiguration derselben und die Zuordnung der Source- und Destinationregister zu dieser ist jeweils ein eigener Cross-Bar-Switch gemäß Figur 8 notwendig.

Die Umsetzung des temporären Bitstroms in den Hauptbitstrom (die Überlagerung des Hauptbitstroms durch die Ausgänge der Cross-Bar-Switches erfolgt durch ODER-Gatter OR am Eingang des Hauptbitstroms (siehe Figur 9).

Die vorstehend beschriebenen Komponenten lassen sich wie in Figur 10 gezeigt zu einer Anordnung zusammenfügen, die in der Lage ist, aus m-bits, ks1-Bits, ks2-Bits, kd-Bits und p-Bits zusammengesetzte Befehle (siehe Figuren 1A bis 1D) in Konfigurations-Daten zur Konfigurierung eines Hardware-Blocks umzusetzen und diese Daten in einen zur Konfigurierung des Hardware-Blocks verwendbaren Bitstrom einzuschreiben.

Abschließend wird die angestrebte Umsetzung (die struktur-prozedurale Programmierung) auch noch in mathematischer Notation angegeben.

Hierzu muß zunächst eine Reihe von die Darstellungen und die Abbildungen betreffenden Vereinbarungen getroffen werden. Es seien
- I⁺: die Menge aller Instruktionen
- I: die Menge aller Datenfluß-relevanten (für die Blockausführung geeigneten) Instruktionen
- SR: die Menge aller Sourceregister einschließlich NO-SOURCE-Darstellung, ausschließlich der Konstantenregister
- CR: die Menge aller Konstantenregister einschließlich der Darstellungen für NO_CONST und IS_CONST
- SR⁺: SR ∪ CR
- DR: die Menge aller Destinationregister einschließlich NO_DEST-Darstellung ausschließlich der Predicate-Bits
- PR: die Menge aller Predicate-Bits einschließlich NO_PRED
- DR⁺: DR ∪ PR
- RN: die Menge aller Register, SR ∪ CR ∪ DR
- RN⁺: die Menge aller Register einschließlich Predicate Bits, RN ∪ PR
- List(pp): die Menge aller möglichen Werte für den Bitstrom B als 4-Tupel (px ∈ PP, offset < k, nbit < k, bitwert < 2^{k} - 1), gegebenenfalls abhängig von pp ∈ PP
- Nbit: die Menge der möglichen Bitwerte (bei n Bit Datenbreite: 0 .. 2ⁿ - 1)
- B: die Menge von k binärwertigen Einträgen als der Bitstrom zur Konfiguration der Struktur
- OCC: die Menge aller Belegungsmarkierungen {FREE, WRITE, READ, READ_WRITE}
- PP: die Menge aller physikalischen Teileinheiten
- PLNUM: die Menge aller eindeutigen Nummern für die logischen Einheiten
- PL: die Menge aller logischen Teileinheiten in einem CB, bestehend aus dem 11 -Tupel (pl ∈ I ∪ RN⁺, plnum ∈ PLNUM, pp ∈ PP, occ ∈ OCC, source ∈ PLNUM, val ∈ Nbit, pbit ∈ PR, List(pp), konfOffset ≤ k, konfAnzahl < k, konfWert < 2^{k} - 1)

Bei der folgenden Beschreibung werden einige Grundannahmen und Funktionen genutzt, die zunächst erläutert werden sollen. Die Kennung innerhalb der Komponente occ (für occurence) wurde vierwertig gewählt, um die Zustände 'nicht belegt' (FREE), 'lesend belegt' (READ), 'schreibend belegt' (WRITE) und 'lesend und schreibend belegt' (READ_WRITE) kennzeichnen zu können. Die Kennung 'lesend belegt' wird dabei gegebenenfalls nicht weiter ausgewertet, aber dennoch innerhalb der Beschreibung weitergeführt.

Weiterhin wird für die Register aus RN angenommen, daß für diese Teileinheiten die logische und physikalische Darstellung übereinstimmt. Dies bedeutet, daß im Gegensatz zu mancher funktionalen Teileinheit (etwa eine konfigurierbare Addition/Subtraktionseinheit die als zwei logische Einheiten dargestellt wird, aber natürlich nur einmal belegbar ist) für Register keine Konfigurierung durchzuführen ist, und daß zwischen der Registernummer rn ∈ RN und der logischen Teileinheitsnununer plnum ∈ PLNUM eine injektive Abbildung (gleichwohl nicht bijektiv) existiert, die im folgenden mit rn2plnum() bezeichnet wird. Diese Annahme gilt nicht für Predicate-Bits als Zielbits.

Unter diesen Voraussetzungen läßt sich die Umsetzung von Befehlen in Strukturinformationen zur Strukturierung von Hardware-Blöcken wie folgt umschreiben:
1. In der ersten Phase wird jede Instruktion einschließlich aller Operanden aus dem originalen Binärformat in eine Beschreibung bi = (i ∈ I, sr1 ∈ SR, cr1 ∈ CR, n1 ∈ Nbit, sr2 ∈ SR, cr2 ∈ CR, n2 ∈ Nbit, dr ∈ DR, pr_source ∈ PR, pr_dest ∈ PR) übergeführt. In dieser Beschreibung wird für eine Konstante die Kennung IS_CONST für cr1 bzw. cr2 sowie der Konstantenwert in n1/n2 eingetragen, wobei in diesem Fall das entsprechende Sourceregister die Kennung NO_SOURCE erhält. Entsprechend wird für Predicate-Befehle (etwa pge ..) für dr NO_DEST eingesetzt, während pr_dest dann die Nummer des Predicate-Bits trägt.
   Für Predicated Instructions (etwa movep) wird zur besseren Unterscheidbarkeit nicht pr_dest, sondern pr_source auf einen entsprechenden Wert gesetzt.
   Eine Instruktion mit j ∉ I bewirkt ein Beenden der Umsetzung.
2. In der zweiten Phase werden maximal fünf Einträge in bi in eine Konfiguration übersetzt. Fünf deshalb, da sich einige Kombinationen gegenseitig ausschließen. Hierzu wird für die einzelnen Teile unterschieden:
   Für Instruktionen bi→i ∈ I und bi→pr_dest == NO_PRED (keine Predicate-Anweisung) wird das erste Element p1 ∈ PL gesucht, das dieses i abdeckt und occ == FREE aufweist. Ist dies nicht auffindbar, so wird die Umsetzung beendet.
   Ist p1 gefunden, so werden alle Elemente aus PL mit occ == READ_WRITE belegt, die auf das selbe physikalische Element pp ∈ PP abgebildet sind. Die Konfiguration für p1 wird in den Bitstrom B mit Hilfe der im Tupel vorhandenen Informationen eingetragen.
   Ist bi→pr_source == NO_PRED, so wird hierfür keine Eintragung durchgeführt. Ansonsten wird nach einem p2 ∈ PL mit p2→pbit == bi→pr_source gesucht, wobei p2→occ == WRITE sein muß. Für dieses p2 wird via List (p2→pp) p1 gesucht und die Eintragung in den Bitstrom vorgenommen, außerdem wird p2→occ auf READ_WRITE gesetzt.
   Für Instruktionen bi→i ∈ I und bi→pr_dest ! = NO_PRED (Predicate-Anweisung) wird das erste Element p1 ∈ PL gesucht, das dieses i abdeckt und occ == FREE aufweist. Ist dies nicht auffindbar, so wird die Umsetzung beendet.
   Ist p1 gefunden, so werden alle Elemente aus PL mit occ = WRITE belegt, die auf das selbe physikalische Element pp ∈ PP abgebildet sind. Die Konfiguration für p1 wird in den Bitstrom B mit Hilfe der im Tupel vorhandenen Informationen eingetragen.
   Für alle Instruktionen i ∈ I gilt: Für bi→sr1 und bi→sr2, für die != NO_SOURCE gilt, wird durch List(p1→pp) die entsprechende Konfiguration in den Bitstrom B eingesetzt, falls für die zu sr1/2 gehörigen p11/12 ∈ PL, p11→occ == FREE, und p12→occ == FREE gilt, zudem wird p1→plnum bei p11/12→source eingetragen (für späteres Forwarding). Ist dies nicht der Fall, wird Phase 3 (Data Forwarding) durchgeführt.
   Für die Sourceregister bi→sr1 und bi→sr2 wird, falls diese != NO_SOURCE sind, in PL die entsprechenden Einträge für die zugehörigen p31 und p32 ∈ PL (erhältlich über die angegebene Funktion rn2plnum()) p31→occ und p32→occ auf READ gesetzt, falls diese vorher != WRITE und != READ_WRITE waren, ansonsten auf READ_WRITE.
   Für die Konstantenregister cr1 und cr2 wird, falls diese != NO_CONST sind, zunächst für alle p3 ∈ PL geprüft, ob p3→pp ∈ CR, p3→occ == READ_WRITE, und p3→val == bi→n1/2 gilt. Ist dies der Fall, wird die Eintragung für p3 entsprechend dem Verfahren für ein Sourceregister durchgeführt.
   Führt diese Suche nicht zum Erfolg, muß ein p3 ∈ PL gesucht werden, für das p4→pp ∈ CR und p4→occ == FREE gilt. Ist dies gefunden, wird bi→n1/2 in p4→val eingetragen und p4→occ = READ_WRITE gesetzt sowie die Eintragung wie bei einem Sourceregister fortgeführt. Ist die Suche erfolglos, wird die Umsetzung beendet.
   Für das Destinationregister dr wird geprüft, ob für den entsprechenden Eintrag p5 mit p5→pp == dr die Bedingung p5→occ == FREE oder READ gilt. Ist dies nicht der Fall, wird die Umsetzung beendet, ansonsten wird p5→occ = WRITE oder READ_WRITE gesetzt und die Eintragung in List (p5→pp) wird in den Bitstrom B übertragen. Für ein eventuelles Data Forwarding wird p5→source = p1 (logisches Element der wertgebenden Instruktion) eingetragen.
3. Für alle Sourceregister sr ∈ SR, die in Phase 2 den Wert für das zugehörige Element p6 ∈ PL den Wert p6→occ == WRITE oder READ_WRITE aufweisen, wird ein Data Forwarding durchgeführt, indem in den Bitstrom B nicht die Werte aus List(p6), sondern aus List (p6→source) eingetragen werden.

Durch die vorstehend beschriebene Konfigurationsdaten-Erzeugung können Befehle von normalen Programmen, d.h. von Programmen, die zur Ausführung in nach dem von-Neumann-Prinzip arbeitenden programmgesteuerten Einheiten (herkömmlichen Mikroprozessoren, Mikrocontrollern etc.) ausgelegt sind, in konfigurierbaren Hardware-Blöcken zur Ausführung gebracht werden.

Die Art und Weise der Umsetzung ermöglicht es dabei, daß sowohl die Umsetzung der Befehle in die Konfigurationsdaten als auch die Hardware-Block-Konfigurierung unter Verwendung dieser Konfigurationsdaten besonders schnell, einfach und effizient erfolgen können.

Durch die beschriebene Umsetzung von Befehlen in Konfigurationsdaten wird eine Folge von Konfigurationsdatensätzen erzeugt, wobei
- einerseits jeweils möglichst viele Befehle in einen Konfigurationdatensatz umgesetzt werden, und
- andererseits jeweils nur so viele Befehle in einen Konfigurationsdatensatz umgesetzt werden, wie durch die zum Zeitpunkt der Hardware-Block-(Um-)Konfigurierung verfügbaren Ressourcen des Hardware-Blocks ausführbar sind.

Dadurch kann bei einer minimalen Anzahl von Umkonfigurierungen des Hardware-Blocks und ohne komplizierte und fehlerträchtige Überprüfungen vor der Verwendung der Konfigurationsdaten ein maximal effizienter Einsatz der Hardware-Blöcke gewährleistet werden.

Dies gilt in besonderem Maße (aber zweifellos nicht ausschließlich), wenn ein Hardware-Block nach Art der Figur 12 der vorliegenden Anmeldung verwendet wird und dieser durch die jeweiligen Konfigurationsdatensätze jeweils komplett umkonfiguriert wird.

Ein Hardware-Block dieser Art, der unter Verwendung eines wie beansprucht erzeugten Konfigurationsdatensatzes konfiguriert ist, führt die in den betreffenden Konfigurationsdatensatz umgesetzten Befehle parallel aus. Wenn der Hardware-Block die in den betreffenden Konfigurationsdatensatz umgesetzten Befehle ausgeführt hat, was der Hardware-Block vorzugsweise (beispielsweise durch das erwähnte READY-Signal oder auf andere Art und Weise) signalisiert, wird der Hardware-Block unter Verwendung des nächsten Konfigurationsdatensatzes umkonfiguriert, wodurch die nächsten Befehle (die zu deren Ausführung auszuführenden Operationen) im Hardware-Block ausgeführt werden. Dieser nächste Konfigurationsdatensatz, unter Verwendung dessen die Umkonfigurierung erfolgt, resultiert aus einer wie vorstehend beschrieben oder ähnlich durchgeführten Umsetzung der nächsten Befehle. Wenn diese nächsten Befehle ausgeführt sind, erfolgt erneut eine Umkonfigurierung des Hardware-Blocks. Dabei wiederholen sich die erwähnten Vorgänge.

Auf diese Weise können zur Ausführung in nach dem von-Neumann-Prinzip arbeitenden programmgesteuerten Einheiten ausgelegte Programme schnell (insbesondere wegen der zumindest teilweisen parallelen Befehlsausführung erheblich schneller als in herkömmlichen programmgesteuerten Einheiten) und einfach in konfigurierbaren Hardware-Blöcken ausgeführt werden.

Bei der vorstehend beschriebenen Umsetzung Befehlen in Konfigurationsdaten wird eine hyperblockweise Umsetzung, d.h. eine Umsetzung, bei welcher genau ein Hyperblock in eine Konfigurationsdaten-Einheit umgesetzt wird, als das anzustrebende Ziel angesehen.

Noch besser wäre es natürlich, wenn mehr als ein Hyperblock in einen Konfigurationsdatensatz umgesetzt werden könnte; dann könnte jeweils die maximale Anzahl von Befehlen gleichzeitig zur Ausführung gebracht werden. Dies ist unter bestimmten Umständen sogar möglich.

Insbesondere können bei Hardware-Blöcken nach Art der Figur 12 (bei Hardware-Blöcken, die die vorstehend bereits erwähnten Predicate-Befehle ausführen können) die Hyperblöcke 0, 1 und 2 der Sequenz 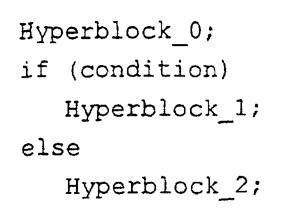 in einen einzigen Konfigurationsdatensatz umgesetzt werden. Dies wird durch die vorstehend bereits erwähnte if-Konversion möglich. Dabei kann die Bedingung (condition) in ein p-Flag umgesetzt werden, und die Ausführung der abhängig von dieser Bedingung auszuführenden Befehle vom Wert des p-Flag abhängig gemacht werden. Dabei kann beispielsweise vorgesehen werden, daß die im if-Zweig (Hyperblock_1) enthaltenen Befehle ausgeführt werden, wenn das p-Flag den Wert 1 hat, und daß die im else Zweig (Hyperblock_2) enthaltenen Befehle ausgeführt werden, wenn das inverse p-Flag den Wert 1 hat. Aus den 3 Hyperblöcken 0, 1 und 2 kann so ein diese umfassender Pseudo-Hyperblock gebildet werden, der in einen einzigen Konfigurationsdatensatz umsetzbar ist.

Ein solcher Pseudo-Hyperblock kann seinerseits wiederum einen oder mehrere Pseudo-Hyperblöcke enthalten. Ein Beispiel hierfür ist die Sequenz

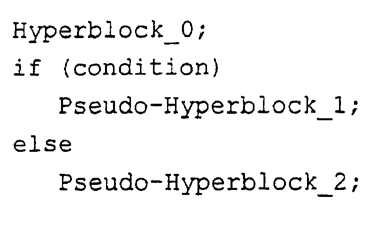

In diesem Fall kann ein Pseudo-Hyperblock gebildet werden, der den Hyperblock 0 und die Pseudo-Hyperblöcke 1 und 2 umfaßt'.

Bei der Umsetzung von Befehlen in Konfigurationsdaten wird daher nach Möglichkeit in einem ersten Schritt versucht, Pseudo-Hyperblöcke zu bilden. Hierzu ist es erforderlich, die Programmstruktur danach zu untersuchen, ob sich Pseudo-Hyperblöcke bilden lassen, und bei den zur Bildung von Pseudo-Hyperblöcken in Frage kommenden Programmteilen eine if-Konversion durchzuführen.

In bestimmten Fällen, insbesondere wenn durch einen konfigurierbaren Hardware-Block "nur" eine bestimmte Schaltung (beispielsweise eine serielle Schnittstelle) realisiert werden soll, kann es sich als vorteilhaft erweisen, wenn der Hardware-Block unter Verwendung einer in einer Schaltungsbeschreibungssprache wie beispielsweise VHDL erfolgten Schaltungsdefinition konfiguriert wird. Hierzu definiert man die Schaltung, die man durch den Hardware-Block realisiert haben möchte, zunächst in einer Schaltungsbeschreibungssprache und setzt dann den dabei erhaltenen Code in die Konfigurationsdaten (in den Konfigurationsdatensatz oder die Konfigurationsdatensatzfolge) um, unter Verwendung welcher der Hardware-Block konfiguriert werden muß, damit dieser der durch ihn zu realisierenden Schaltung entspricht. Der Hardware-Block ist dabei vorzugsweise so aufgebaut, daß durch ihn je nach Konfiguration verschiedene Schaltungen realisiert werden können und/oder daß auch wie vorstehend beschrieben in Konfigurationsdaten umgesetzte Befehle in ihm zur Ausführung gebracht werden können.

Die vorstehenden Darstellungen und Realisierungsmöglichkeiten bezogen sich jeweils auf einen Hardware-Block der in der Figur 12 gezeigten Art. Es dürfte einleuchten, daß hierauf keine Einschränkung besteht. Die beschriebene Konfigurationsdaten-Generierung läßt sich auch für modifizierte oder erweiterte Hardware-Blöcke durchführen. Dabei sind sowohl die Konfigurationsdaten-Erzeugung als auch die Konfigurierung des Hardware-Blocks unter Verwendung dieser Konfigurationsdaten, schnell, einfach und effizient durchführbar. Nichtsdestotrotz werden dabei die Komponenten des Hardware-Blocks optimal ausgenutzt. Dies alles ermöglicht einen äußerst effizienten Betrieb des Hardware-Blocks.

### Bezugszeichenliste

- 1: predecode unit
- 2: instruction buffer
- 3: decode, rename & load unit
- 4: s-unit
- 5: data cache
- 6: memory interface

- 41: programmable structure buffer
- 42: functional unit with programmable structure
- 43: integer/address instruction buffer
- 44: integer register file

- AUx: arithmetische Einheit
- CU: Vergleichs-Einheit
- DEMUX: Demultiplexer
- MUXAx: Multiplexer des ersten Typs
- MUXB: Multiplexer des zweiten Typs

## Patentansprüche

1. Verfahren zum Konfigurieren eines konfigurierbaren Hardware-Blocks,
**dadurch gekennzeichnet,**
**daß** die Hardware-Block-Konfigurierung unter Verwendung von Konfigurationsdaten erfolgt, die aus einer Umsetzung von Befehlen oder Befehlsfolgen eines auszuführenden Programmes resultieren, und daß bei der Umsetzung der Befehle oder Befehlsfolgen die Schritte
- Ermittlung der zur Ausführung eines jeweiligen Befehls benötigten Art von Teileinheit (AUx, CU, DEMUX, MUXAx, MUXB). des konfigurierbaren Hardware-Blocks,
- Auswahl einer noch nicht anderweitig belegten Teileinheit der zuvor ermittelten Art, und - sofern eine solche Teileinheit gefunden werden konnte -
- Konfigurieren von um die ausgewählte Teileinheit herum vorgesehenen konfigurierbaren Verbindungen
ausgeführt werden.

2. Verfahren nach Anspruch 1,
**dadurch gekennzeichnet,**
**daß** die Umsetzung mit dem ersten Befehl eines nur einen Eintrittspunkt und einen Austrittspunkt aufweisenden Befehls-Blocks begonnen wird.

3. Verfahren nach Anspruch 1 oder 2,
**dadurch gekennzeichnet,**
**daß** die Umsetzung nach dem Umsetzen des letzten Befehls eines nur einen Eintrittspunkt und einen Austrittspunkt aufweisenden Befehls-Blocks automatisch beendet wird.

4. Verfahren nach Anspruch 2 oder 3,
**dadurch gekennzeichnet,**
**daß** die Umsetzung hyperblock-weise erfolgt.

5. Verfahren nach einem der vorhergehenden Ansprüche,
**dadurch gekennzeichnet,**
**daß** die Umsetzung automatisch beendet wird, wenn eine zur Umsetzung benötigte Komponente des Hardware-Blocks nicht oder nicht mehr verfügbar ist.

6. Verfahren nach einem der vorhergehenden Ansprüche,
**dadurch gekennzeichnet,**
**daß** funktionsmäßig konfigurierbaren Teileinheiten (AUx, CU, DEMUX, MUXAx, MUXB) des Hardware-Blocks virtuelle Einheiten zugeordnet werden, wobei die virtuellen Einheiten Funktionen repräsentieren, welche der betreffenden Teileinheit durch unterschiedliche Konfigurationen verliehen werden können.

7. Verfahren nach Anspruch 6,
**dadurch gekennzeichnet,**
**daß** die virtuellen Einheiten sämtlicher physikalischer Teileinheiten (AUx, CU, DEMUX, MUXAx, MUXB) in einer Tabelle oder Liste eingetragen sind.

8. Verfahren nach Anspruch 7,
**dadurch gekennzeichnet,**
**daß** die Tabellen- oder Listeneinträge Informationen darüber enthalten, welcher physikalischen Teileinheit (AUx, CU, DEMUX, MUXAX, MUXB) die betreffende virtuelle Einheit zugeordnet ist.

9. Verfahren nach Anspruch 7 oder 8,
**dadurch gekennzeichnet,**
**daß** die Tabellen- oder Listeneinträge Informationen darüber enthalten, wie die zugeordnete physikalischen Teileinheit (AUx, CU, DEMUX, MUXAx, MUXB) zu konfigurieren ist, um ihr die durch die virtuelle Einheit repräsentierte Funktion zu verleihen.

10. Verfahren nach einem der vorhergehenden Ansprüche,
**dadurch gekennzeichnet,**
**daß** die Auswahl einer zur Ausführung eines Befehls benötigten Teileinheit (AUx, CU, DEMUX, MUXAx, MUXB) über eine Suche nach einer virtuellen Einheit der benötigten Art erfolgt.

11. Verfahren nach Anspruch 10,
**dadurch gekennzeichnet,**
**daß** dafür gesorgt wird, daß die zur Verwendung ausgewählte virtuelle Einheit der benötigten Art und diejenigen virtuellen Einheiten, die der selben physikalischen Teileinheit (AUx, CU, DEMUX, MUXAx, MUXB) zugeordnet sind wie die ausgewählte virtuelle Einheit, bei nachfolgenden Umsetzungen nicht mehr zur Verwendung ausgewählt werden können.

12. Verfahren nach einem der vorhergehenden Ansprüche,
**dadurch gekennzeichnet,**
**daß** beim Konfigurieren der um die ausgewählte Teileinheit (AUx, CU, DEMUX, MUXAX, MUXB) herum vorgesehenen konfigurierbaren Verbindungen zur Verbindung der betreffenden Teileinheit mit einer durch den umzusetzenden Befehl definierten Daten- und/oder Signalquelle überprüft wird, ob die betreffende Daten- und/oder Signalquelle ein Speicherbereich ist, der zuvor durch eine der Teileinheiten des Hardware-Blocks beschrieben wurde.

13. Verfahren nach Anspruch 12,
**dadurch gekennzeichnet,**
**daß** dann, wenn festgestellt wird, daß die durch den umzusetzenden Befehl definierte Daten- und/oder Signalquelle zuvor durch eine der Teileinheiten (AUx, CU, DEMUX, MUXAx, MUXB) des Hardware-Blocks beschrieben wurde, diese Teileinheit als Daten- und/oder Signalquelle verwendet wird.

14. Verfahren nach einem der vorhergehenden Ansprüche,
**dadurch gekennzeichnet,**
**daß** beim Konfigurieren der um die ausgewählte Teileinheit (AUx, CU, DEMUX, MUXAx, MUXB) herum vorgesehenen konfigurierbaren Verbindungen zur Verbindung der betreffenden Teileinheit mit einem durch den umzusetzenden Befehl definierten Daten- und/oder Signalziel überprüft wird, ob das betreffende Daten- und/oder Signalziel ein Speicherbereich ist, der auch durch eine andere Teileinheit des Hardware-Blocks beschrieben wird.

15. Verfahren nach Anspruch 14,
**dadurch gekennzeichnet,**
**daß** dann, wenn festgestellt wird, daß das durch den umzusetzenden Befehl definierte Daten- und/oder Signalziel ein Speicherbereich ist, der auch durch eine andere Teileinheit (AUx, CU, DEMUX, MUXAx, MUXB) des Hardware-Blocks beschrieben wird, ein anderer Speicherbereich als Daten- und/oder Signalziel verwendet wird.

16. Verfahren nach Anspruch 15,
**dadurch gekennzeichnet,**
**daß** für die das selbe Daten- und/oder Signalziel repräsentierenden Speicherbereiche das bei superskalaren Prozessoren angewandte register renaming durchgeführt wird.

17. Verfahren nach einem der vorhergehenden Ansprüche,
**dadurch gekennzeichnet,**
**daß** dann, wenn im umzusetzenden Befehl eine Konstante enthalten ist, nach einem die Konstante enthaltenden Konstanten-Speicherbereich gesucht wird und dann, wenn ein solcher Konstanten-Speicherbereich gefunden wurde, dieser Konstanten-Speicherbereich als Daten- und/oder Signalquelle verwendet wird.

18. Verfahren nach Anspruch 17,
**dadurch gekennzeichnet,**
**daß** dann, wenn die Konstante nicht bereits in einem der vorhandenen Konstanten-Speicherbereiche gespeichert ist, die Konstante in einen neuen Konstanten-Speicherbereich gespeichert wird, und dieser neue Konstanten-Speicherbereich als Daten- und/oder Signalquelle verwendet wird.

19. Verfahren insbesondere nach einem der vorhergehenden Ansprüche,
**dadurch gekennzeichnet,**
**daß** bei der Umsetzung von Befehlen in Konfigurationsdaten versucht wird, mehrere Hyperblöcke umfassende Pseudo-Hyperblöcke zu bilden.

20. Verfahren nach Anspruch 19,
**dadurch gekennzeichnet,**
**daß** die Pseudo-Hyperblöcke unter Verwendung der if-Konversion gebildet werden.

21. Verfahren nach Anspruch 19 oder 20,
**dadurch gekennzeichnet,**
**daß** die Umsetzung von Befehlen in Konfigurationsdaten nach Möglichkeit pseudo-hyperblock-weise erfolgt.

## Claims

1. Method for configuration of a configurable hardware block,
**characterized in that**
the hardware block is configured using configuration data which results from a conversion of commands or command sequences of a program to be run, and **in that**, during the conversion of the commands or command sequences, the steps of
- determination of the type of sub unit (AUx, CU, DEMUX, MUXAx, MUXB) of the configurable hardware block required to carry out a respective command,
- selection of a sub unit of the previously determined type which is not yet being used for any other purpose and - provided it is possible to find such a sub unit -
- configuration of configurable connections which are provided around the selected sub unit
are carried out.

2. Method according to Claim 1,
**characterized in that**
the conversion is started with the first command in a command block which has only one entry point and one exit point.

3. Method according to Claim 1 or 2,
**characterized in that**
the conversion is ended automatically after conversion of the last command in a command block which has only one entry point and one exit point.

4. Method according to Claim 2 or 3,
**characterized in that**
the conversion is carried out in hyperblocks.

5. Method according to one of the preceding claims,
**characterized in that**
the conversion is ended automatically when a component of the hardware block which is required for conversion is not available or is no longer available.

6. Method according to one of the preceding claims,
**characterized in that**
functionally configurable sub units (AUx, CU, DEMUX, MUXAx, MUXB) of the hardware block are allocated virtual units, with the virtual units representing functions which the relevant sub unit can be given by different configurations.

7. Method according to Claim 6,
**characterized in that**
the virtual unit of all the physical sub units (AUx, CU, DEMUX, MUXAx, MUXB) are entered in a table or list.

8. Method according to Claim 7,
**characterized in that**
the table or list entries contain information about which physical sub unit (AUx, CU, DEMUX, MUXAx, MUXB) has been allocated the relevant virtual unit.

9. Method according to Claim 7 or 8,
**characterized in that**
the table or list entries contain information about how the associated physical sub unit (AUx, CU, DEMUX, MUXAx, MUXB) can be configured in order to give it the function represented by the virtual unit.

10. Method according to one of the preceding claims,
**characterized in that**
a sub unit (AUx, CU, DEMUX, MUXAx, MUXB) which is required to carry out a command is selected on the basis of a search for a virtual unit of the required type.

11. Method according to Claim 10,
**characterized in that**
care is taken to ensure that the virtual unit of the required type which is selected for use and those virtual units which are allocated to the same physical sub unit (AUx, CU, DEMUX, MUXAx, MUXB) as the selected virtual unit can no longer be selected for use in subsequent conversions.

12. Method according to one of the preceding claims,
**characterized in that**
during configuration of the configurable connections which are provided around the selected sub unit (AUx, CU, DEMUX, MUXAx, MUXB) for connection of the relevant sub units to a data and/or signal source which is defined by the command to be converted, a check is carried out to determine whether the relevant data and/or signal source is a memory area which has previously been written to by one of the sub units in the hardware block.

13. Method according to Claim 12,
**characterized in that**
if it is found that the data and/or signal source which is defined by the command to be converted has previously been written to by one of the sub units (AUx, CU, DEMUX, MUXAx, MUXB) in the hardware block, this sub unit is used as the data and/or signal source.

14. Method according to one of the preceding claims,
**characterized in that**,
during configuration of the configurable connections, which are provided around the selected sub unit (AUx, CU, DEMUX, MUXAx, MUXB), for connection of the relevant sub unit to a data and/or signal destination which is defined by the command to be converted, a check is carried out to determine whether the relevant data and/or signal destination is a memory area which has also been written to by another sub unit in the hardware block.

15. Method according to Claim 14,
**characterized in that**,
if it is found that the data and/or signal destination which is defined by the command to be converted is a memory area which has also been written to by another sub unit (AUx, CU, DEMUX, MUXAx, MUXB) in the hardware block, another memory area is used as the data and/or signal destination.

16. Method according to Claim 15,
**characterized in that**,
the renaming register, which is used in superscaler processors, is carried out for those memory areas which represent the same data and/or signal destination.

17. Method according to one of the preceding claims,
**characterized in that**,
if the command to be converted contains a constant, a search is carried out for a constant memory area which contains that constant and, if such a constant memory area has been found, this constant memory area is used as the data and/or signal source.

18. Method according to Claim 17,
**characterized in that**,
if the constant is not already stored in one of the existing constant memory areas, the constant is stored in a new constant memory area, and this new constant memory area is used as the data/or signal source.

19. Method in particular according to one of the preceding claims,
**characterized in that**,
when converting commands in configuration data, an attempt is made to form pseudo hyperblocks which comprise a number of hyperblocks.

20. Method according to Claim 19,
**characterized in that**,
the pseudo hyperblocks are formed using the if conversion.

21. Method according to Claim 19 or 20,
**characterized in that**,
where possible, the conversion of commands in configuration data is carried out in pseudo hyperblocks.

## Revendications

1. Procédé de configuration d'un bloc matériel configurable, **caractérisé en ce que** la configuration des blocs matériels s'effectue grâce à des données de configuration résultant d'une conversion de commandes ou de séquences de commandes d'un programme à exécuter et **en ce que**, lors de la conversion des commandes ou de séquences de commande, on réalise les phases suivantes :
- détermination du type d'unité partielle (AUx, CU, DEMUX, MUXAx, MUXB) du bloc matériel configurable nécessaire à l'exécution d'une commande donnée,
- sélection d'une unité partielle non encore attribuée dans un autre but, du type déterminé au préalable et (à condition que l'on ait pu trouver une telle unité partielle)
- configuration de liaisons configurables prévues autour de l'unité partielle sélectionnée.

2. Procédé selon la revendication 1, **caractérisé en ce que** la conversion commence avec la première commande d'un bloc de commande présentant un seul point d'entrée et un seul point de sortie.

3. Procédé selon la revendication 1 ou 2, **caractérisé en ce que** la conversion se termine automatiquement après la conversion de la dernière commande d'un bloc de commande présentant un seul point d'entrée et un seul point de sortie.

4. Procédé selon la revendication 2 ou 3, **caractérisé en ce que** la conversion se déroule hyperbloc par hyperbloc.

5. Procédé selon l'une des revendications précédentes, **caractérisé en ce que** la conversion se termine automatiquement si un composant du bloc matériel nécessaire à la conversion n'est pas disponible ou n'est plus disponible.

6. Procédé selon l'une des revendications précédentes, **caractérisé en ce que** des unités virtuelles sont attribuées à des unités partielles du bloc matériel configurables selon les fonctions (AUx, CU, DEMUX, MUXAx, MUXB), les unités virtuelles représentant des fonctions pouvant être conférée à l'unité partielle concernée grâce à diverses configurations.

7. Procédé selon la revendication 6, **caractérisé en ce que** les unités virtuelles de l'ensemble des unités partielles physiques (AUx, CU, DEMUX, MUXAx, MUXB) sont consignées dans un tableau ou une liste.

8. Procédé selon la revendication 7, **caractérisé en ce que** les enregistrements tabulaires ou sous forme de listes contiennent des informations indiquant quelle unité partielle physique (AUx, CU, DEMUX, MUXAx, MUXB) est affectée à l'unité virtuelle concernée.

9. Procédé selon la revendication 7 ou 8, **caractérisé en ce que** les enregistrements tabulaires ou sous forme de listes contiennent des informations signalant comment configurer l'unité partielle physique associée (AUx, CU, DEMUX, MUXAx, MUXB), pour lui conférer la fonction représentée par l'unité virtuelle.

10. Procédé selon l'une des revendications précédentes, **caractérisé en ce que** la sélection d'une unité partielle nécessaire à l'exécution d'une commande (AUx, CU, DEMUX, MUXAx, MUXB) s'effectue par le biais d'une recherche d'une unité virtuelle du type nécessaire.

11. Procédé selon la revendication 10, **caractérisé en ce que** le système veille à ce que l'unité virtuelle du type voulu et sélectionnée pour application de même que les unités virtuelles associées à la même unité partielle physique (AUx, CU, DEMUX, MUXAx, MUXB) que l'unité virtuelle sélectionnée ne puissent plus être sélectionnées pour application lors de conversions subséquentes.

12. Procédé selon l'une des revendications précédentes, **caractérisé en ce que** le système, pour configurer les liaisons configurables prévues autour de l'unité partielle sélectionnée (AUx, CU, DEMUX, MUXAx, MUXB) pour lier l'unité partielle concernée à une source de données et/ou de signaux définie grâce à la commande de conversion, vérifie si la source de données et/ou de signaux concernée est une zone mémoire décrite au préalable par une des unités partielles du bloc matériel.

13. Procédé selon la revendication 12, **caractérisé en ce que**, s'il apparaît que la source de données et/ou de signaux définie par la commande de conversion a été décrite au préalable par l'une des unités partielles (AUx, CU, DEMUX, MUXAx, MUXB) du bloc matériel, cette unité partielle s'utilise comme source de données et/ou de signaux.

14. Procédé selon l'une des revendications précédentes, **caractérisé en que** le système, pour configurer les liaisons configurables prévues autour de l'unité partielle sélectionnée (AUx, CU, DEMUX, MUXAx, MUXB) pour lier l'unité partielle concernée à une destination de données et/ou de signaux définie par la commande de conversion, vérifie si la destination de données et/ou de signaux concernée est une zone mémoire décrite également par une autre unité partielle du bloc matériel.

15. Procédé selon la revendication 14, **caractérisé en ce que**, s'il apparaît que la destination de données et/ou de signaux définie par la commande de conversion est une zone mémoire, décrite également par une autre unité partielle (AUx, CU, DEMUX, MUXAx, MUXB) du bloc matériel, une autre zone mémoire s'utilise comme destination de données et/ou de signaux.

16. Procédé selon la revendication 15, **caractérisé en ce que**, pour les zones mémoires représentant la même destination de données et/ou de signaux, le registre utilisé dans des processeurs superscalaires subissent un changement de nom.

17. Procédé selon l'une des revendications précédentes, **caractérisé en ce que**, si une constante est contenue dans la commande de conversion, après que le système a recherché une zone mémoire de constantes contenant la constante et, si une telle zone mémoire de constantes a été trouvée, cette zone mémoire de constantes s'utilise comme source de données et/ou de signaux.

18. Procédé selon la revendication 17, **caractérisé en ce que**, si la constante n'est pas déjà mémorisée dans l'une des zones mémoires de constantes présentes, la constante est mémorisée dans une nouvelle zone mémoire de constantes, et cette nouvelle zone mémoire de constantes s'utilise comme source de données et/ou de signaux.

19. Procédé en particulier selon l'une des revendications précédentes, **caractérisé en ce que** le système, pour convertir des commandes en données de configuration, cherche à former des pseudo-hyperblocs regroupant plusieurs hyperblocs.

20. Procédé selon la revendication 19, **caractérisé en ce que** les pseudo-hyperblocs sont formés à l'aide de la conversion if.

21. Procédé selon la revendication 19 ou 20, **caractérisé en ce que** la conversion de commandes en données de configuration s'effectue le cas échéant pseudo-hyperbloc par pseudo-hyperbloc.
